# EUROPEAN PATENT APPLICATION

(11) **EP 3 387 894 A1**
(43) Date of publication of application: **17.10.2018**
(21) Application number: 16875815.9
(22) Date of filing: 16.12.2016
(51) Int. Cl.: A01G 7/00

(54) **INFORMATION PROCESSING DEVICE, INFORMATION PROCESSING METHOD, AND PROGRAM**

(30) Priority: 16.12.2015 JP 2015245436; 16.12.2015 JP 2015245437
(71) Applicant: Plantio, Inc., Minato-ku, Tokyo 108-0073 (JP)
(72) Inventor: SERIZAWA, Takayoshi, Tokyo 108-0073 (JP)
(74) Representative: Ström & Gulliksson AB
(86) International application number: PCT/JP2016/087677
(87) International publication number: WO 2017/104841

(57) **Abstract**

The cultivation assistance information generated and provided by past systems has been insufficient as information for assisting even beginner gardeners to expertly cultivate plants. In this information processing device for assisting the cultivation of plants, a cultivation information acquisition unit 510 acquires information indicating the conditions for each plant being cultivated by each of a plurality of users. A growth model generation/update unit 612 generates the optimum growth model for each environment the plants are placed in on the basis of the acquired information. A comparison information generation unit 511 generates comparison information for comparing the acquired information and the growth model. A learning unit 511 compares the comparison information and the growth model and updates the growth model. A cultivation assistance unit 512 compares the comparison information and the growth model and generates information for assisting the cultivation of the plants.

## Description

### TECHNICAL FIELD

The present invention relates to an information processing device, an information processing method, and a program.

### BACKGROUND ART

In recent years, the popularity of gardening/home gardening has expanded, but the fact is that the actual market size has been flat. This is because many people including beginners feel difficulty in cultivating plants, such as plants are not grown well or wither quickly. Meanwhile, systems intended to assist in cultivating plant have been known conventionally (see, for example, Patent Document 1).

Patent Document 1: Japanese Unexamined Patent Application, Publication No. 2010-75172

### DISCLOSURE OF THE INVENTION

### Problems to be Solved by the Invention

However, in such systems of the related art, there was a problem of lacking in concreteness as a method of preparing and providing a cultivation guide for assisting cultivation. For this reason, it was insufficient as assistance information for cultivating plants well even by a beginner.

The present invention was made in light of the foregoing, and it is an object of the present invention to provide a method of assisting in cultivating plant well even by a beginner.

### Means for Solving the Problems

In order to achieve the above object, an information processing device which is an embodiment of the present invention, is an information processing device that assists in cultivating a plant and includes: a cultivation information acquisition unit that acquires cultivation information indicating a status of each plant cultivated by each of a plurality of users; a growth model generation/update unit that generates or updates a growth model optimal for each environment in which the plant is placed on the basis of the cultivation information acquired by the cultivation information acquisition unit; and a cultivation assistance unit that generates cultivation assistance information used when an assistance target user cultivates the plant on the basis of the cultivation information indicating the status of the plant cultivated by the assistance target user acquired by the cultivation information acquisition unit and the growth model.

Further, the information processing device may further include: a growth model selection unit that selects, in a case in which each of the plurality of users is desired to cultivate one or more species of plants, the growth model of each of the one or more species of plants serving as a target from a plurality of growth models stored in advance on the basis of at least one of a plant name, a harvest period, and a recipe of a dish; and a cultivation schedule generation unit that generates a cultivation schedule optimal for each of the plurality of users on the basis of the growth model selected by the growth model selection unit.

Further, the information processing device may further include a relevant information generation unit that generates plant relevant information serving as information related to the plant cultivated by each of the plurality of users for each of the plurality of users.

Further, the information processing device may further include: a keyword detection unit that detects a keyword related to an abnormality of the plant cultivated by the user from content of a message transmitted by each of user terminals operated by each of the plurality of users; an abnormality specifying unit that specifies a plant having an abnormality among the plants cultivated by the user who transmits a message including the detected keyword and specifies a type of the abnormality from the cultivation information of the plant; and an abnormality learning unit that performs learning intended for acquiring information effective for preventing or eliminating the specified abnormality on the basis of the cultivation information.

An information processing method and a program of one aspect of the present invention are a method and a program corresponding to the information processing device of one embodiment of the present invention described above.

### Effects of the Invention

According to the present invention, even a beginner can cultivate plants well. BRIEF DESCRIPTION OF THE DRAWINGS

Fig. 1 illustrates an overall structure of a cultivation assistance system including a cultivation management server which is an information processing device of one embodiment of the present invention.
Fig. 2 is a diagram illustrating an overview of the cultivation assistance system of Fig. 1.
Fig. 3 is a diagram illustrating an example of an external configuration of a planter used for plant cultivation by a user in the cultivation assistance system of Fig. 1.
Fig. 4 is a diagram illustrating another example of an external configuration of a planter used for plant cultivation by a user in the cultivation assistance system of Fig. 1.
Fig. 5 is a block diagram illustrating a hardware configuration of a user terminal in the cultivation assistance system of Fig. 1.
Fig. 6 is a block diagram illustrating a hardware configuration of the cultivation management server of Fig. 1.
Fig. 7 is a functional block diagram illustrating a functional configuration of the cultivation management server of Fig. 1.
Fig. 8 is a diagram illustrating an example of a growth model used in the cultivation assistance system of Fig. 1.
Fig. 9 is a diagram specifically illustrating a process in which the cultivation management server of the cultivation assistance system of Fig. 1 generates cultivation assistance information for a user of an assistance target using the growth model of Fig. 8.
Fig. 10 is a diagram illustrating an example different from the example of Fig. 8 among examples of a growth model used in the cultivation assistance system of Fig. 1.
Fig. 11 is a flowchart explaining a process until a growth model is updated in a cultivation management server after a planter receives a sign-in of a user who is a cultivation assistance target.
Fig. 12 is a diagram for describing a method of installing a camera constituting an imaging unit of a planter.
Fig. 13 is a plan view illustrating an arrangement example of an imaging unit constituting a system unit portion of a planter.
Fig. 14 is a diagram illustrating an example of an external configuration of a part of a system unit portion of a planter.
Fig. 15 is a diagram illustrating an example of an external configuration of a base portion constituting a planter.
Fig. 16 is a diagram illustrating an example of an external configuration in a case in which an expansion unit is attached to a base constituting a planter.
Fig. 17 is a diagram illustrating an example of an external configuration of a main system unit constituting a planter.
Fig. 18 is a diagram illustrating a specific example in a case in which an imaging unit of Fig. 17 includes an indicator.
Fig. 19 illustrates a display example of an indicator in a case in which an imaging unit of Fig. 17 includes an LED lamp as an indicator.
Fig. 20 illustrates a specific example in a case in which cultivation information of a plant cultivated using a planter is displayed on a display unit of a main system unit.
Fig. 21 illustrates another specific example in a case in which cultivation information of a plant cultivated using a planter is displayed on a display unit of a main system unit.
Fig. 22 illustrates a specific example in a case in which cultivation information of a plant cultivated using a planter is displayed on a display unit of a base portion.
Fig. 23 is a diagram illustrating an example of a screen in which a captured image of a plant is displayed among examples of a screen displayed on a user terminal.
Fig. 24 is a diagram illustrating an example of a screen on which an alert history is displayed among examples of a screen displayed on a user terminal.
Fig. 25 is a diagram illustrating another example of a screen on which a captured image of a plant is displayed among examples of a screen displayed on a user terminal.
Fig. 26 is a diagram illustrating another example of a screen on which a captured image of a plant is displayed among examples of a screen displayed on a user terminal.
Fig. 27 is a diagram illustrating another example of a screen on which a captured image of a plant is displayed among examples of a screen displayed on a user terminal.
Fig. 28 is a diagram illustrating an example of a screen on which a plurality of planters cultivated by a user are displayed in a list form among examples of a screen displayed on a user terminal.
Fig. 29 is a diagram illustrating an example of a screen on which cultivation information of each type of plant is displayed in a graph form among examples of a screen displayed on a user terminal.
Fig. 30 is a diagram illustrating an example of a screen on which cultivation information of a plurality of users is plotted on a graph illustrated in Fig. 29.
Fig. 31 is a diagram illustrating an example of a screen on which cultivation assistance information is displayed among examples of a screen displayed on a user terminal.
Fig. 32 is a diagram illustrating an example of a screen on which plant relevant information is displayed among examples of a screen displayed on a user terminal.
Fig. 33 is a diagram illustrating an example of a screen on plant relevant information is displayed among examples of a screen displayed on a user terminal.
Fig. 34 is a diagram illustrating an example of a screen on plant relevant information is displayed among examples of a screen displayed on a user terminal.
Fig. 35 is a diagram illustrating an example in which an introduction of a flower arrangement using a specific plant is displayed on a user terminal as plant relevant information provided from a cultivation management server.
Fig. 36 is a diagram illustrating an example of a screen on which detailed information of a plant is displayed among examples of a screen displayed on a user terminal.
Fig. 37 is a diagram illustrating an example of a layout in a case in which a plurality of planters are arranged.
Fig. 38 is a diagram illustrating an example of a joint in a case in which a plurality of planters are arranged.
Fig. 39 is a diagram illustrating another example of a joint in a case in which a plurality of planters are arranged.
Fig. 40 is a diagram illustrating another example of a joint in a case in which a plurality of planters are arranged.
Fig. 41 is a diagram illustrating an example of a screen of a relay cultivation manager among examples of a screen displayed on a user terminal.
Fig. 42 is an image diagram illustrating an overview of a plant abnormality detection function and an abnormality learning function of a cultivation management server.

### PREFERRED MODE FOR CARRYING OUT THE INVENTION

Hereinafter, exemplary embodiments of the present invention will be described with reference to the appended drawings.

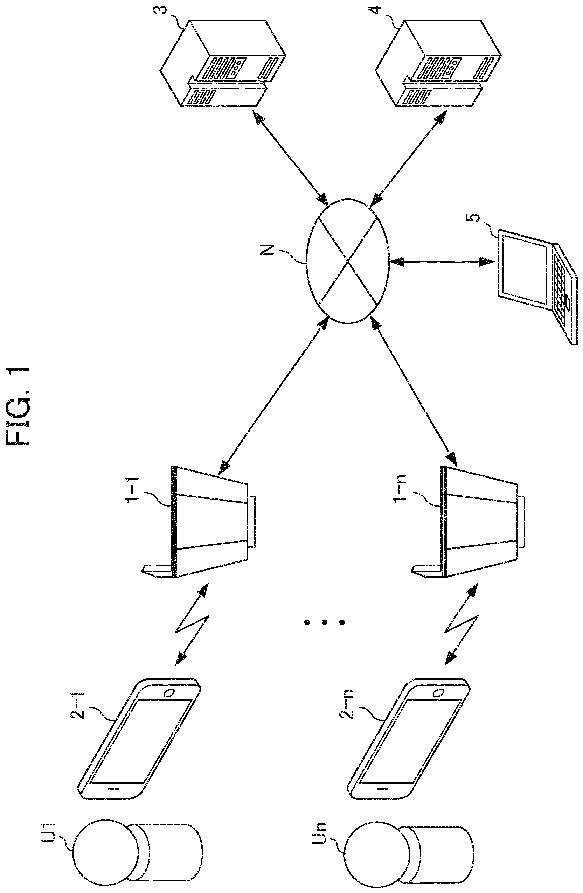

Fig. 1 illustrates an overall structure of a cultivation assistance system including a cultivation management server 3 which is an information processing device of one embodiment of the present invention.

The information processing system illustrated in Fig. 1 is configured such that each of planters 1-1 to 1-n used when n users U1 to Un (n is an arbitrary integer value of 1 or more) cultivate plants, each of user terminals 2-1 to 2-n operated by each of the users U1 to Un, the cultivation management server 3 which is an information processing device of one embodiment of the present invention, a weather data management server 4, and an specialist terminal 5 are connected to one another via a predetermined network N such as the Internet.

In the present embodiment, an operation of each of the users U1 to Un on each of the user terminals 2-1 to 2-n is assumed to specifically mean, for example, the following. That is, when each of the users U1 to Un performs a manipulation using application software (hereinafter referred to as "application") installed in each of the user terminals 2-1 to 2-n, it is assumed to mean that each of the users U1 to Un manipulates each of the user terminals 2-1 to 2-n. Here, it will be appreciated that this is merely an example. A planter 1-k (k is an arbitrary integer value from 1 to n) and a user terminal 2-k can perform wireless communication at a short distance using, for example, Bluetooth (a registered trademark) or the like.

Hereinafter, in a case in which there is no need to individually distinguish the planters 1-1 to 1-n, the users U1 to Un, and the user terminals 2-1 to 2-n, they are referred to collectively as a "planter 1," a "user U," and a "user terminal 2," respectively.

For convenience of description, the numbers of planter 1, the numbers of user U, and the numbers of user terminal 2 are drawn at 1: 1: 1 in Fig. 1, but in practice, the number of user terminals 2 and the number of planters 1 possessed by one user U need not be necessarily equal. For example, using one user terminal 2, the user U may cultivate the same kind of plants using a plurality of planter 1 or may cultivate different species of plans using a plurality of planter 1. Specifically, for example, a pansy, a tulip, and a hibiscus may be cultivated using three different planters 1. Further, for example, in a case in which one user U manipulates each of a smartphone and a tablet terminal, there are cases in which one planter 1 is manipulated through two user terminals 2 manipulated by one user U.

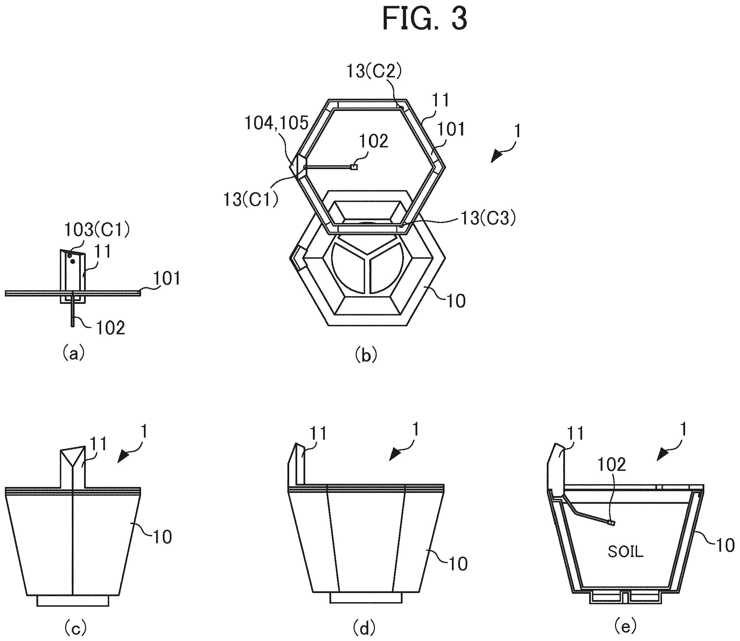

The planter 1 is a flower pot used for the user U to cultivate plants and includes functions normally included in general flower pots for cultivating plants, an acquisition unit that acquires information (hereinafter referred to as "cultivation information") indicating a status of a plant being cultivated, a display unit that displays the obtained cultivation information, a wireless communication unit that transmits the acquired cultivation information to the cultivation management server 3 via the network N, and a power securing unit that secures electric power necessary for activating the planter 1. At this time, the cultivation information may include information acquired by the planter 1 and information input by the user U1 manipulating the user terminal 2. A specific configuration and functions of the planter 1 will be described later with reference to Fig. 3.

In the present embodiment, elements constituting the cultivation information at least include season information (α), environment information (β), place information (γ), and growth status information (θ). Here, "at least" is used to indicate that elements other than the above-mentioned four elements may be included in the cultivation information.

The season information (α) among the elements constituting the cultivation information is information related to a season in which cultivation is performed. Specifically, for example, information related to four seasons, a month, and a date and time can be included in the season information (α).

The environment information (β) among the elements constituting the cultivation information is information related to a cultivating environment. The environment information (β) can be roughly divided into environment information (β1) obtained from the planter 1 and environment information (β2) acquired from an entity other than the planter 1 such as the weather data management server 4. Specifically, for example, information related to soil moisture, temperature, soil temperature, illuminance, acidity or basicity of soil, and electric conductivity of soil can be included as the environment information (β1) obtained from planter 1. Further, as the weather information (β2) obtained from the weather data management server 4, information related to the weather announced by a Meteorological Agency or the like.

The place information (γ) among the elements constituting the cultivation information is information related to a place and a position at which cultivation is performed. Specifically, for example, information related to a place and a position to be input by the user U using the user terminal 2 can be included in the place information (γ). Although not illustrated, information obtained from a global positioning system (GPS), position information of a wireless fidelity (Wi-Fi) router, and position information of a base station provided by a telecommunication carrier can be included in the place information (γ).

The growth status information (θ) among the elements constituting the cultivation information is information related to a growth status of a plant (germinated, flowering, dead, or the like). An input form of the growth status information is not particularly limited. For example, a form in which the user U inputs using the user terminal 2 may be employed or a form in which a captured image of a plant captured by a camera C may be employed. Both of the forms may be employed.

The user terminal 2 is configured by a smartphone or the like, and when the user U performs a predetermined manipulation, the user terminal 2 performs an input and transmission of the cultivation information of the plant cultivated in the planter 1. Further, the user terminal 2 performs reception and an output of information for assisting the user U of the cultivation assistance target in cultivating the plant (hereinafter referred to as "cultivation assistance information") which is transmitted from the cultivation management server 3.

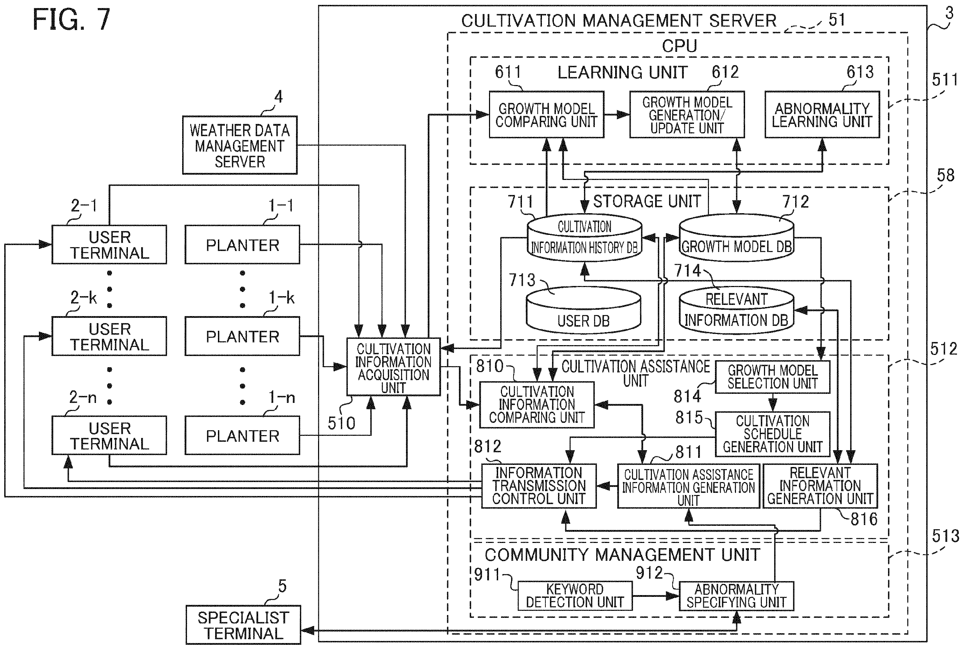

The cultivation management server 3 is a server which is one example of the information processing device of the present invention. Specifically, the cultivation management server 3 manages the cultivation of the planter 1 by acquiring the cultivation information from planter 1 or the user terminal 2 and performing, generation and update of the growth model, generation and transmission of the cultivation assistance information, and the like. Specifically, the "cultivation assistance information" is information generated by the cultivation management server 3 for the user U of the cultivation assistance target, and means information generated on the basis of a result of comparing the cultivation information of the plant cultivated by the user U with the growth model. Here, the "growth model" refers to data indicating an optimum (ideal) cultivation status as a cultivation status of the plant in an environment surrounding the plant cultivated using the planter 1 (hereinafter referred to as a "cultivation environment") or data obtained by processing the data. The growth model is generated for each of a plurality of cultivation environments. The growth model can include data related to a temporal change of information indicating a state of the soil of the planter 1. That is, information obtained by comparing the cultivation information of the plant cultivated by the user U with the growth model includes information useful for the user U of the cultivation assistance target. The cultivation management server 3 generates the cultivation assistance information for the user U on the basis of such information. Accordingly, the user U can cultivate the plant skillfully by utilizing the cultivation assistance information even though the user U is a beginner in the plant cultivation. Specific functions of the cultivation management server 3 will be described later with reference to Fig. 7.

The weather data management server 4 is a server that manages information related to the weather in the environment information (β) which is an element of the cultivation information. Specifically, the weather data management server 4 accumulates and manages information related to the weather announced by the Meteorological Agency or the like.

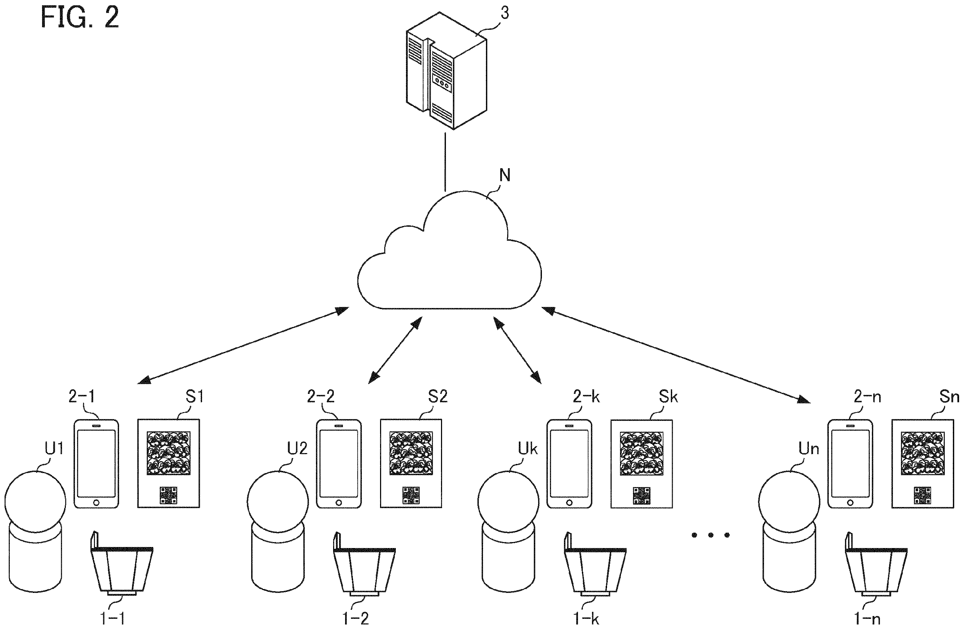

Fig. 2 is a diagram illustrating an overview of the cultivation assistance system of Fig. 1.

As illustrated in Fig. 2, the users U1 to Un are assumed to cultivate the same type of plants (the pansy in the example of Fig. 2) using the planters 1-1 to 1-n, respectively. The users U1 to Un are assumed to manipulate the user terminals 2-1 to 2-n, respectively.

The users U1 to Un cultivate the pansy under various cultivation environments. Therefore, among the users U1 to Un, there is a person who performs cultivation smoothly and a person who does not perform cultivation smoothly.

The user U1 is a user who sows a seed S1 and cultivates the pansy using the planter 1-1. Then, the user U1 inputs information which can be input by the user U1 among the latest cultivation information of the planter 1-1 by manipulating the user terminal 2-1. The user terminal 2-1 transmits the information input by the user U1 to the cultivation management server 3 via the network N as appropriate. Examples of the information which can be input by the user U1 include the season information (α), the place information (γ), and the growth status information (θ).

Further, the planter 1-1 displays information which can be acquired by the planter 1-1 among the latest cultivation information of the planter 1-1, and transmits the information to the cultivation management server 3 via the network N as appropriate. Examples of the information which can be acquired by the planter 1-1 include the environment information (β1) which can be acquired from planter 1 among the environment information (β) and information which can be acquired using the GPS among the place information (γ) constituting the cultivation information.

A process similar to that of the planter 1-1 can be performed on the planters 1-2 to 1-n.

The cultivation management server 3 acquires the cultivation information which is transmitted from the planters 1-1 to 1-n or the user terminals 2-1 to 2-n and generates or updates the growth model on the basis of the acquired cultivation information.

Specifically, for example, the cultivation management server 3 generates one initial growth model serving as a default model for a plant serving as a growth model generation target on the basis of initial data of the acquired cultivation information or predetermined information including general information related to the plant. Of course, it is unknown whether or not the initial growth model generated as the default model is optimal for various cultivation environments. In this regard, the cultivation management server 3 generates a plurality of groups by grouping various cultivation environments from a predetermined viewpoint. Then, the cultivation management server 3 appropriately updates the growth model on the basis of the cultivation information of the plant actually cultivated by the user U so that the growth model is different from the initial growth model for each of a plurality of groups. Specifically, for example, a plurality of groups are obtained by grouping the cultivation environments from a viewpoint of each region or each season, and the growth model is appropriately updated for each of a plurality of groups. That is, even for the same kind of plants, if the cultivation region or the cultivation season is different, the cultivation environment such as an average temperature or humidity or a sunshine time is naturally different. For this reason, an optimal cultivation method differs for each cultivation region or each cultivation season, and thus the growth model generated by the cultivation management server 3 is also generated for each cultivation region or each cultivation season (that is, for each group of the cultivation environment).

In other words, a plurality of pieces of information of positive content indicating, for example, that cultivation is successful and a plurality of pieces of negative contents indicating, for example, that cultivation fails are included in the cultivation information transmitted from the planters 1-1 to 1-n and the user terminals 2-1 to 2-n. The cultivation management server 3 acquires and analyzes various kinds of the cultivation information described above and then updates the growth model to indicate the optimum cultivation status in the cultivation environment for each group of the cultivation environment. Further, the cultivation information of the negative content is also valuable information that can be used as a lesson for generating the growth model.

The initial growth model generated as the default model by the cultivation management server 3 is maintained as the latest growth model of practical use while being updated as various kinds of cultivation information obtained from a result of actual cultivation are added if necessary as described above. Accordingly, the cultivation management server 3 can generate the appropriate cultivation assistance information adapted to individual specific cultivation environments surrounding the plant which is unable to be covered by commonly known cultivation methods. That is, the cultivation management server 3 can generate the following cultivation assistance information by using the growth model described above.

For example, in the example of Fig. 2, the user Uk cultivates the seed Sk of the pansy using the planter 1-k. As described above, the user Uk also inputs the information which can be acquired by the user Uk among the latest cultivation information of the planter 1-k by manipulating the user terminal 2-k, and transmits the information to the cultivation management server 3 via the network N as appropriate. Further, the planter 1-k transmits the information acquired by the planter 1-k among the latest cultivation information of the planter 1-k to the cultivation management server 3 via the network N as appropriate.

Here, a case in which cultivation is not smooth since the user Uk is a beginner or the like is assumed. In this case, the user Uk can acquire the cultivation assistance information from the cultivation management server 3 and utilize the cultivation assistance information. Accordingly, the user Uk can cultivate without failure by taking measures based on the cultivation assistance information (for example, measures of increasing the soil moisture amount).

Fig. 3 is a diagram illustrating an example of an external configuration of the planter 1 used for the user U to cultivate the plant in the cultivation assistance system of Fig. 1. Fig. 3(a) is a front view illustrating an example of an external configuration of a main system unit portion 11. Fig. 3(b) is a plan view illustrating an example of an external configuration of a base 10 and the main system unit portion 11. Fig. 3(c) is a rear view illustrating an example of an external configuration of the planter 1. Fig. 3(d) is a side view illustrating an example of an external configuration of the planter 1. Fig. 3(e) is a side sectional view illustrating an example of an external configuration of the planter 1.

As illustrated in Fig. 3, the planter 1 includes a base portion 10 and the main system unit portion 11. The base portion 10 is a flower pot configured in a substantially hexagonal tubular shape having a bottom and includes portions capable of implementing common functions of general flower pots for plant cultivation such as a function of holding a predetermined amount of soil. The main system unit portion 11 includes solar panel units 101, a sensor unit 102, an imaging unit 103, a communication unit 104, and a display unit 105. As illustrated in Fig. 3, the main system unit portion 11 has an external appearance in which the solar panel units 101 are arranged substantially without gaps on a thin base material formed in a substantially hexagonal shape to be installed along an upper end portion of the base portion 10. The base portion 10 and the main system unit portion 11 are detachable, and usually plant cultivation is carried out in a state in which the main system unit portion 11 is attached to the upper end of the base portion 10.

The solar panel 101 functions as a power securing unit that secures electric power for activating the sensor unit 102, the imaging unit 103, the wireless communication unit 104, and the display unit 105 in the planter 1. The power securing unit is not limited to the solar panel unit 101 as long as it is possible to secure electric power necessary for performing various kinds of functions of the planter 1. Specifically, for example, a method of securing electric power from a commercial AC power supply may be employed.

The sensor unit 102 functions as an acquisition unit that acquires the cultivation information of the plant cultivated using the planter 1 and includes an assembly of various kinds of sensors. Specifically, for example, a soil moisture meter that measures a soil moisture amount, a thermometer that measures temperature and temperature of soil, a luminometer that measures illuminance, a PH meter that measures the acidity or the basicity of soil, and an EC sensor that measures electrical conductivity of soil can be included in the sensor unit 102.

The imaging unit 103 functions as an imaging unit that images the plant cultivated using the planter 1 and includes at least one camera C. The imaging unit 103 in the example of Fig. 3 includes a total of three cameras C including a main camera C1 and sub cameras C2 and C3. Since the imaging unit 103 is configured by a plurality of cameras C as described above, the cultivation information obtained from the captured image can be made more accurate. Further, a microphone, a speaker, and a universal serial bus (USB) terminal may be installed in a part of the imaging unit 103. The imaging unit 103 periodically and automatically images the plant cultivated using the planter 1. The captured image of the plant imaged by the imaging unit 103 is automatically transmitted to the cultivation management server 3 via the communication unit 104. Accordingly, the cultivation management server 3 can generate the cultivation assistance information on the basis of the captured image of the plant transmitted by the planter 1.

The wireless communication unit 104 is wirelessly connected to the network N such as the Internet and performs transmission and reception of the cultivation information acquired by the sensor unit 102 and the cultivation assistance information generated by the cultivation management server 3 with the cultivation management server 3. Specifically, for example, the wireless communication unit 104 can perform wireless communication conforming to general purpose standards such as 4th generation mobile communication system/4th generation (4G), long term evolution (LTE), and Wi-Fi. Further, as described above, the planter 1 may perform wireless communication with the user terminal 2 through the network N but may perform wireless communication using Bluetooth (registered trademark) or the like without going through the network N.

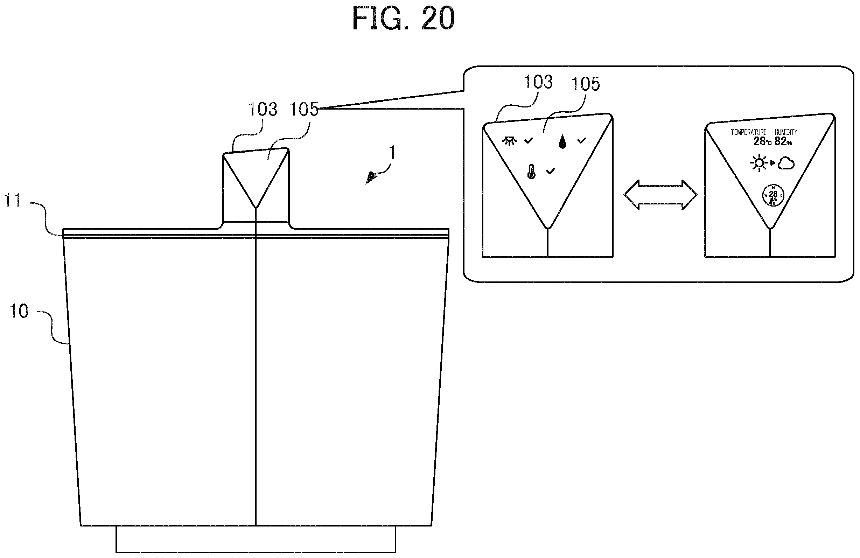

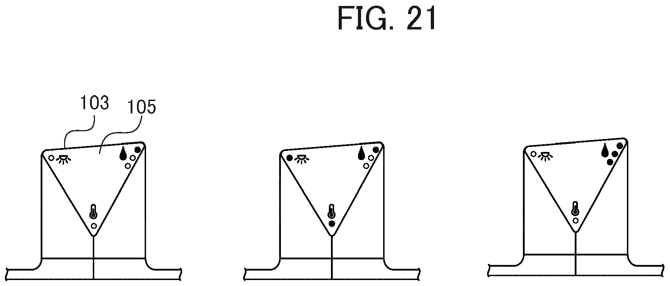

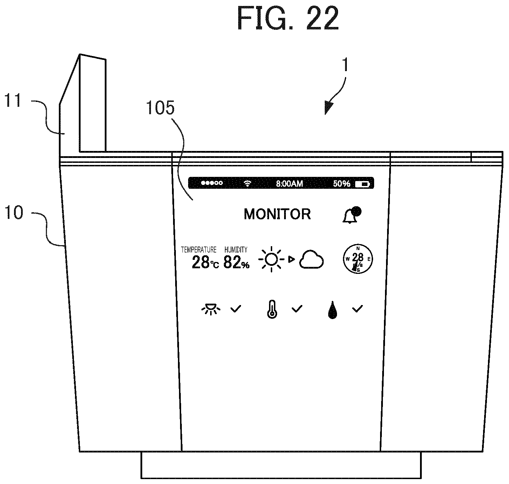

The display unit 105 displays the cultivation information acquired by the sensor unit 102. The cultivation information displayed on the display unit 105 of the main system unit portion 11 will be described later in detail with reference to Figs. 20 and 21. The display unit 105 can also be installed in the base portion 10. The cultivation information displayed on the display unit 105 of the base portion 10 will be described later in detail with reference to Fig. 22.

Although not illustrated, an AR marker can also be displayed on planter 1. In this case, the user U can read the AR marker through the user terminal 2 and causes a virtual three-dimensional image illustrating the current status of the plant to be displayed on a screen of the user terminal 2. In this case, the content of the virtual three-dimensional image displayed on the user terminal 2 is content in which the cultivation information of the plant is reflected. That is, in a case in which a numerical value included in the cultivation information of the plant cultivated using the planter 1 is desirable, content of the virtual three-dimensional image to be displayed is also content indicating that the plant is in a vigorous state. In contrast, in a case in which a numerical value included in the cultivation information of the plant is not desirable, content of the virtual three-dimensional image to be displayed is also content indicating that the plant is not in a vigorous state. Accordingly, in a case in which it is desired to confirm whether or not the plant is growing up vigorously, the user U can confirm the plant without actually looking at it. The user U can also confirm the status of the plant by viewing the virtual three-dimensional image (a character of the plant or the like) which is obtained by personifying the plant displayed on the screen of the user terminal 2. Accordingly, the user U can cultivate the plant delightfully as if it were a game.

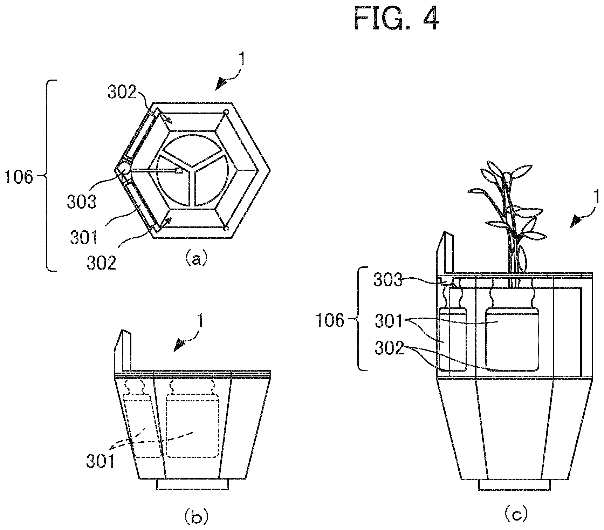

Fig. 4 is a diagram illustrating another example of an external configuration in a case in which the planter 1 used for plant cultivation by the user U has a water supply function in the cultivation assistance system of Fig. 1. Fig. 4(a) is a plan view illustrating an example of an external configuration of the planter 1. Fig. 4(b) is a side view illustrating an example of an external configuration of the planter 1. Fig. 4(c) is a plan view illustrating an example of an external configuration in a case in which an expansion unit 12 to be described later is attached to the planter 1. As illustrated in Fig. 4(c), the expansion unit 12 is configured in a substantially hexagonal tubular shape and attached to be sandwiched between an upper end portion of the base portion 10 and a bottom portion of a main system unit 11. If the expansion unit 12 is attached to the planter 1, it is possible to increase the amount of soil which can be stored in planter 1, and thus it is possible to cultivate the plant with a high height easily.

As illustrated in Fig. 4, the planter 1 can include a moisture supply unit 106 that automatically optimizes the soil moisture amount. The moisture supply unit 106 includes a water pack 301, a water injection unit 302, and a moisture control unit 303. The water pack 301 is a pack for storing water to supply moisture to the soil. The water stored in the water pack 301 may be replenished if necessary, or the water pack may be exchangeable. The water injection unit 302 supplies the water stored in the water pack to the soil. The moisture control unit 303 executes control of water supply to the soil by the water injection unit 302 on the basis of information related to an appropriate soil moisture amount obtained from the cultivation assistance information.

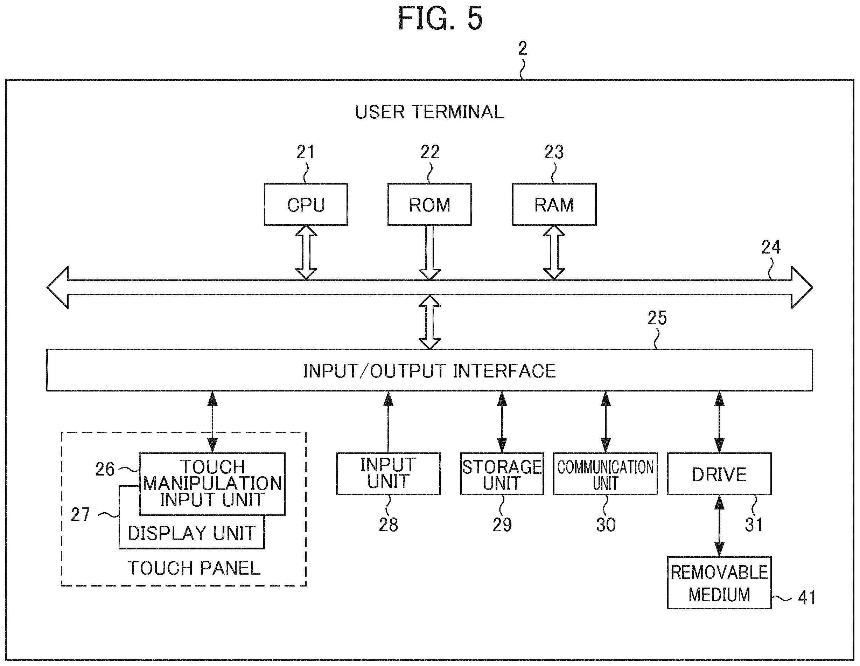

Fig. 5 is a block diagram illustrating a hardware configuration of the user terminal 2 in the cultivation assistance system of Fig. 1.

The user terminal 2 is configured by a smartphone or the like. The user terminal 2 includes a central processing unit (CPU) 21, a read-only memory (ROM) 22, a random-access memory (RAM) 23, a bus 24, an input/output interface 25, a touch manipulation input unit 26, a display unit 27, an input unit 28, a storage unit 29, a communication unit 30, and a drive 31.

The CPU 21 executes various kinds of processes in accordance with a program recorded onto the ROM 22 or a program loaded from the storage unit 29 into the RAM 23. The RAM 23 appropriately stores data and the like necessary for the CPU 21 to execute various kinds of processes.

The CPU 21, the ROM 22, and the RAM 23 are connected to one another via the bus 24. The input/output interface 25 is also connected to the bus 24. The touch manipulation input unit 26, the display unit 27, the input unit 28, the storage unit 29, the communication unit 30, and the drive 31 are connected to the input/output interface 25.

The touch manipulation input unit 26 is constituted by, for example, a capacitance type or resistance film type (a pressure sensitive type) position input sensor stacked on a display surface of the display unit 27, and detects coordinates of a position at which a touch manipulation is performed. Here, the touch manipulation is a manipulation of causing an object to touch or approach the touch manipulation input unit 26. The object touching or approaching the touch manipulation input unit 26 is, for example, a finger of the user U, a touch pen, or the like.

The input unit 28 includes various kinds of hardware buttons or the like, and inputs various kinds of information in accordance with an instruction manipulation of the user U. The storage unit 29 is constituted by a dynamic random-access memory (DRAM) or the like and stores various kinds of data. The communication unit 30 controls communication with other devices (the planter 1, the user terminal 2 other than its own device, the cultivation management server 3, and the weather data management server 4 in the example of Fig. 1) via a network N including the Internet.

The drive 31 is installed if necessary. A removable medium 41 constituted by a magnetic disk, an optical disk, a magneto-optical disk, a semiconductor memory, or the like is appropriately loaded onto the drive 31. A program read from the removable medium 41 by the drive 31 is installed in the storage unit 29 if necessary. Further, the removable medium 41 can also store various kinds of data stored in the storage unit 29, similarly to the storage unit 29.

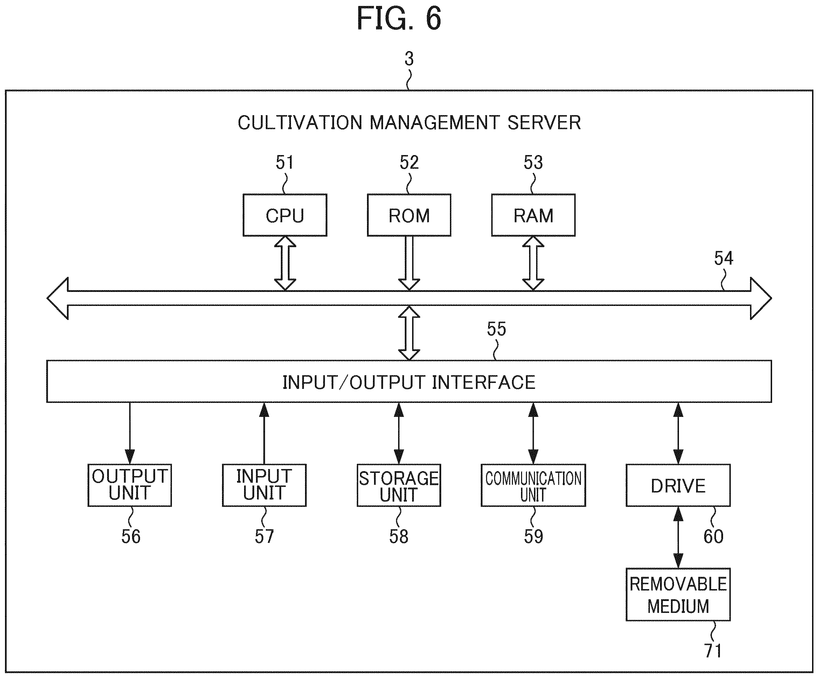

Fig. 6 is a block diagram illustrating a hardware configuration of the cultivation management server 3 in Fig. 1.

The cultivation management server 3 includes components from a CPU 51 to a drive 60. An output unit 56 is constituted by a display, a speaker, or the like, and outputs various kinds of information as an image or a sound. An input unit 57 is constituted by a keyboard, a mouse, or the like, and inputs various kinds of information. Each of components from the CPU 51 to an input/output interface 55 and components from a storage unit 58 to the drive 60 has basically a function and a configuration similar to that of the CPU 21 to the drive 31 in Fig. 5. Therefore, description thereof is omitted.

A removable medium 71 constituted by a magnetic disk, an optical disk, a magneto-optical disk, a semiconductor memory, or the like is appropriately loaded onto the drive 60. A program read from the removable medium 71 by the drive 60 is installed in the storage unit 58 if necessary. The removable medium 71 stores various kinds of data stored in the storage unit 58 similarly to the storage unit 58.

Fig. 7 is a functional block diagram illustrating a functional configuration of the cultivation management server 3 of Fig. 1.

The CPU 51 (Fig. 6) of the cultivation management server 3 functions as a cultivation information acquisition unit 510, a learning unit 511, a cultivation assistance unit 512, and a community management unit 513.

A cultivation information history DB 711, a growth model DB 712, a user DB 713, and a relevant information DB 714 are installed in one area of the storage unit 58 (Fig. 6). The previous cultivation information acquired from planters 1-1 to 1-n is stored in the cultivation information history DB 711. The growth model for each plant and for each group of the cultivation environment is stored in the growth model DB 712. Registration information of the user U is stored in the user DB 713. Plant relevant information serving as the information related to the plant cultivated by the user U is stored in the relevant information DB 714.

For the sake of convenience of description, in the example of Fig. 7, the growth model DB 712 is installed in the cultivation management server 3, but the installation place thereof is not particularly limited thereto. For example, the growth model DB 712 may be stored in another server (not illustrated).

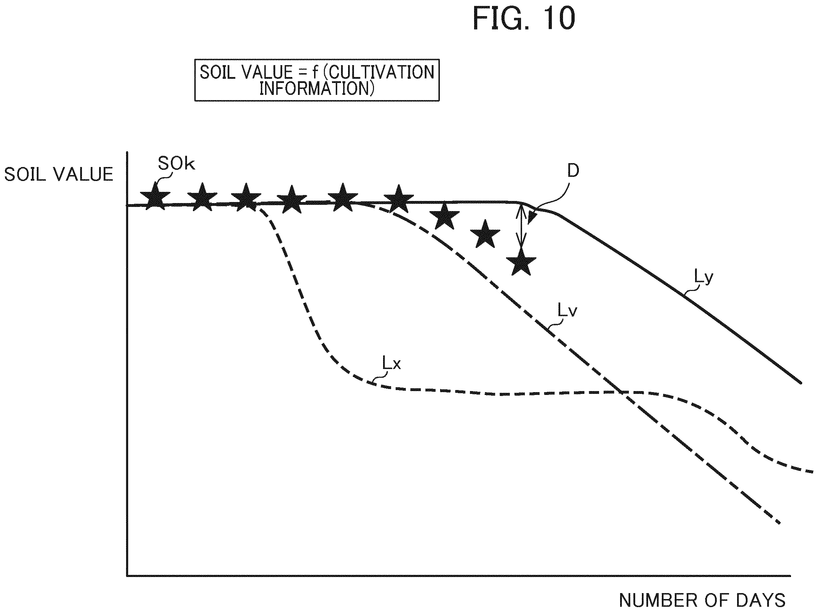

The cultivation information acquisition unit 510 acquires the cultivation information transmitted by the planter 1 or the user terminal 2, the previous cultivation information stored in the cultivation information history DB 711, and the information related to the weather transmitted by the weather data management server 4. The learning unit 511 includes a growth model comparing unit 611, a growth model generation/update unit 612, and an abnormality learning unit 613. The growth model comparing unit 612 compares the acquired cultivation information or processing information of the cultivation information with the growth model stored in the growth model DB 712. Here, the processing information of the cultivation information refers to information obtained by processing the cultivation information so that it can be compared with the growth model stored in the growth model DB 712. Specifically, for example, the growth model illustrated in Fig. 10 to be described later is a model indicating temporal information of a SOIL value serving as a value which is an index indicating the state of the soil. Therefore, it is desirable to process the cultivation information into the SOIL value for comparison with the growth model. That is, the SOIL value is an example of the information obtained by processing the acquired cultivation information so that it can be compared with the growth model stored in the growth model DB 712.

The growth model generation/update unit 612 generates an initial growth model for a plant serving as a growth model generation target on the basis of initial data of the acquired cultivation information or predetermined information including general information related to the plant. Further, the growth model generation/update unit 612 updates the growth model for each group of the cultivation environment on the basis of various kinds of cultivation information which are the actual cultivation results by the user U. Further, machine learning or the like can be used when updating the growth model.

Here, a specific example of a process in the learning unit 511 will be described. For example, the users U1 to Un (Fig. 2) who cultivate the plant (the pansy in the present example) using the planters 1-1 to 1-n input the cultivation information related to the pansy planted in each of the planters 1-1 to 1-n by manipulating the user terminals 2-1 to 2-n, respectively. The cultivation information related to the pansy input to the user terminal 2 is transmitted from the user terminal 2 to the cultivation management server 3. Further, each of the planters 1-1 to 1-n also acquires the cultivation information related to the pansy by the sensor unit 102. The cultivation information related to the pansy acquired by the sensor unit 102 is transmitted from the planter 1 to the cultivation management server 3.

The cultivation information acquisition unit 510 acquires the respective elements of the cultivation information of the pansy transmitted from the planters 1-1 to 1-n and the user terminals 2-1 to 2-n to the cultivation management server 3, the information related to the weather transmitted from the weather data management server 4, and the previous cultivation information related to the pansy stored in the cultivation information history DB 711.

The cultivation information acquisition unit 510 then transmits the cultivation information related to the pansy to the growth model comparing unit 611. That is, the cultivation information related to the pansy is generated for each of the planters 1-1 to 1-n, and the cultivation information related to the pansy is also generated at each timing even for each planter 1. Accordingly, for one planter 1, the chronological cultivation information at the respective timings in the entire life of the pansy including seed sowing, germination, flowering, and withering of the pansy is obtained.

The growth model generation/update unit 612 updates the growth model of the pansy to the latest status for each of the planters 1-1 to 1-n on the basis of the comparison result obtained by the growth model comparing unit 611. Further, the growth model generation/update unit 612 stores the updated growth model of the pansy in the growth model DB 712.

The abnormality learning unit 613 performs learning intended for acquiring information effective for preventing or eliminating an abnormality of the plant specified by the abnormality specifying unit 912 on the basis of the cultivation information of the plant.

The functional configuration of the learning unit 511 has been described above. Next, a functional configuration of the cultivation assistance unit 512 will be described.

The cultivation assistance unit 512 includes a cultivation information comparing unit 810, a cultivation assistance information generation unit 811, an information transmission control unit 812, a growth model selection unit 814, a cultivation schedule generation unit 815, and a relevant information generation unit 816. The cultivation information comparing unit 810 compares the cultivation information of the user of the cultivation assistance target (the user Uk in the example of Fig. 7) or the processing information thereof with the latest growth model described above, and extracts a coincidence point and a difference therebetween. The cultivation assistance information generation unit 811 generates the cultivation assistance information including the measures to be taken by the user Uk in order to fill the difference on the basis of the coincidence point and the differences extracted by the cultivation information comparing unit 810.

The information transmission control unit 812 executes control such that the generated cultivation assistance information is transmitted to the user terminal 2-k of the user Uk of the cultivation assistance target. Accordingly, the user Uk can cultivate the plant without failure with reference to the cultivation assistance information transmitted to user terminal 2-k. Further, the information transmission control unit 812 can also execute control such that the generated cultivation assistance information to the planter 1-k. Accordingly, the planter 1-k can execute a process based on the transmitted cultivation assistance information. Specifically, for example, in a case in which the transmitted cultivation assistance information includes specific measures related to an adjustment of the soil moisture amount, the moisture supply unit 106 can perform a process for adjusting the soil moisture amount to an appropriate amount automatically. Further, the information transmission control unit 812 can execute control such that the plant relevant information is transmitted to the user U.

Here, a specific example of a process in the cultivation assistance unit 512 will be described. For example, the user Uk who cultivates the plant (the pansy in this example) using the planter 1-k can acquire the cultivation assistance information as a result of performing the following process in the cultivation assistance unit 512 of the cultivation management server 3.

That is, the cultivation information comparing unit 810 of the cultivation assistance unit 512 compares the cultivation information related to the pansy of the planter 1-k or the processing information thereof with the latest growth model related to the pansy stored in the growth model DB 712.

On the basis of the comparison result obtained by the cultivation information comparing unit 810, the cultivation assistance information generation unit 811 generates the cultivation assistance information which is useful information for cultivating the pansy using the planter 1-k.

The information transmission control unit 812 executes control such that the cultivation assistance information generated by the cultivation assistance information generation unit 811 is transmitted to the user terminal 2-k. The user terminal 2-k receives the cultivation assistance information transmitted by the cultivation management server 3.

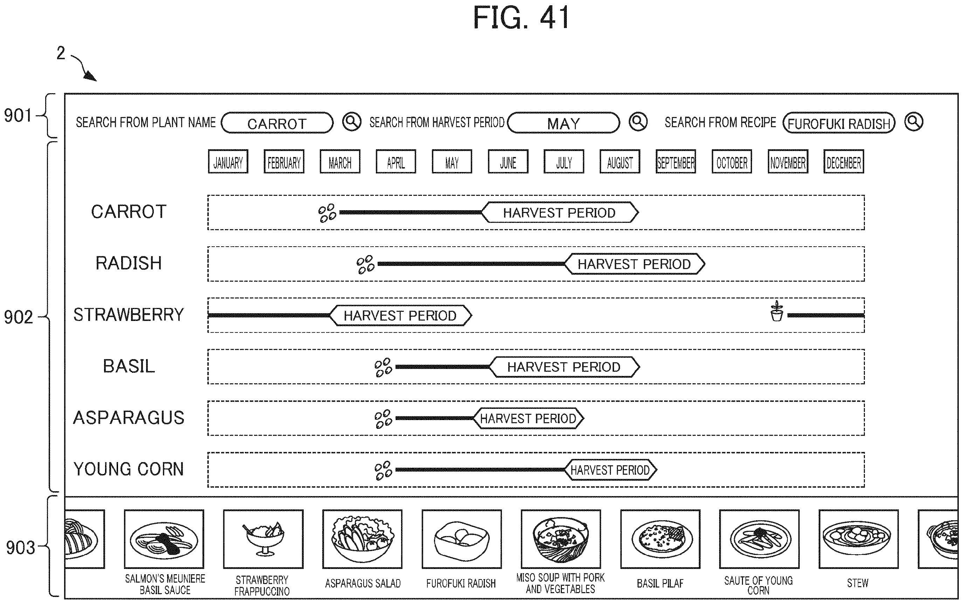

The growth model selection unit 814 selects the growth model for one or more species of plans matching a search condition designated by the user U in a relay cultivation manager. The relay cultivation manager will be described later with reference to Fig. 41. The cultivation schedule generation unit 815 generates a cultivation schedule optimal for the user U on the basis of the growth model selected by the growth model selection unit 814 in the relay cultivation manager.

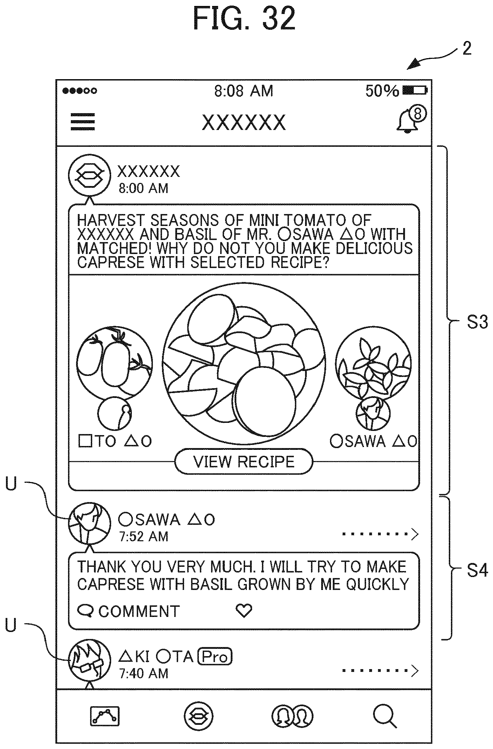

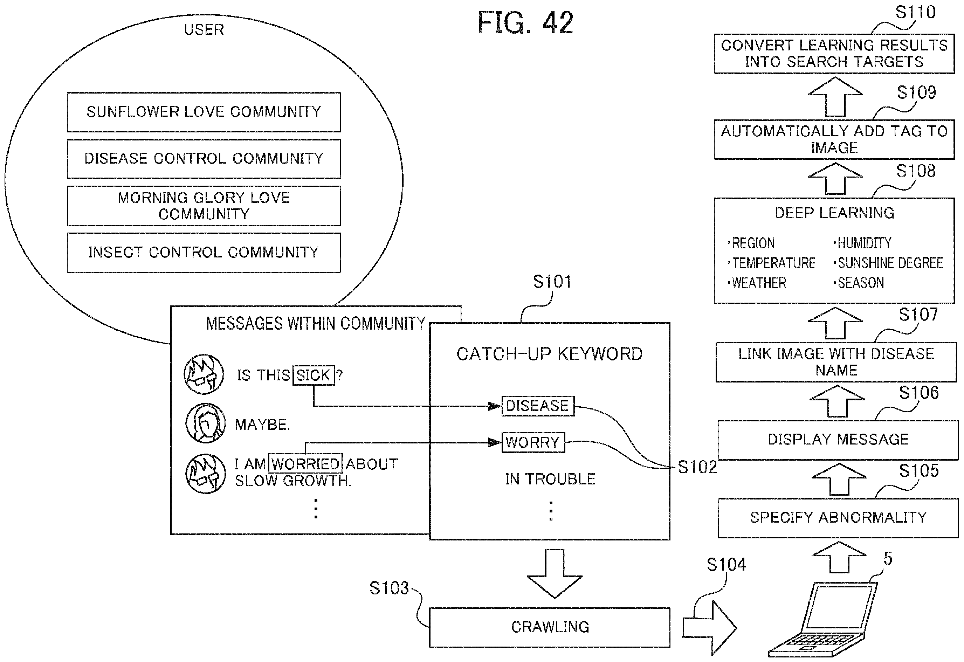

The relevant information generation unit 816 generates the plant relevant information. The plant relevant information generated by the relevant information generation unit 816 will be described later in detail with reference to Figs. 32 to 35. The community management unit 513 manages various kinds of communities in which a plurality of users U participate. The community management unit 513 includes a keyword detection unit 911 and an abnormality specifying unit 912. The process performed by the community management unit 513 will be described later in detail with reference to Fig. 42.

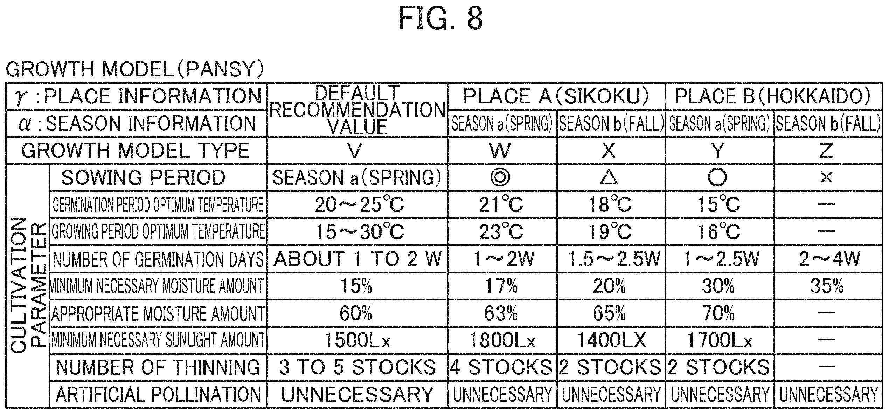

Fig. 8 is a diagram illustrating an example of the growth model used in the cultivation assistance system of Fig. 1.

In the example of Fig. 8, a recommendation value (hereinafter referred to as a "cultivation parameter recommendation value") for each of elements (hereinafter referred to as "cultivation parameters") necessary for cultivation of the pansy is set for each combination of the place information (γ) and the season information (α) for cultivating the pansy, so that the growth model of the pansy is generated.

In practice, since the cultivation parameter recommendation value differs (for example, the appropriate moisture amount before germination is different from the appropriate moisture amount after germination) depending on the growing status of the pansy, but in the example of Fig. 8, for the convenience of description, one cultivation parameter recommendation value is displayed.

As the cultivation parameter in the example of Fig. 8, elements of a season in which the seed of the pansy is sowed in the soil (hereinafter referred to as "sowing period"), optimum temperature to germinate the seed of the pansy planted in the soil (hereinafter referred to as a "germination period optimum temperature"), optimum temperature to grow the germinated pansy (hereinafter referred to as "growing period optimum temperature"), the number of days required until the seed of the pansy is germinated (hereinafter referred to as "the number of germination days"), a minimum soil moisture amount necessary to cultivate the pansy (hereinafter referred to as a "minimum necessary moisture amount"), a soil moisture amount optimal for cultivating the pansy (hereinafter referred to as an "appropriate moisture amount"), a minimum sunlight amount necessary to cultivate the pansy (hereinafter referred to as a "minimum necessary sunlight amount"), the number of seedlings left without being thinned in a case in which a work of extracting seedlings (hereinafter referred to as "thinning") is performed to leave a small number of seedlings from a state in which the pansy seedlings are densely planted (hereinafter referred to as "the number of thinning"), and a work in which a person pollinates pollen of the pansy (hereinafter referred to as "artificial pollination") are included.

Further, there are cases in which the cultivation information is not acquired by the cultivation management server 3, for example, if a plant to be cultivated is a new species of plant or the like. In such a plant whose information is not accumulated in the growth model DB 712, a commonly known recommendation value (hereinafter referred to as a "default recommendation value") is set as each cultivation parameter recommendation value. That is, the initial growth model is generated on the basis of the default recommendation value shown in an item of a table of Fig. 8. As the commonly known recommendation value, information or the like generally provided by a seed and seedling dealer or the like can be used.

Here, a specific example of the growth model illustrated in Fig. 8 will be described. In the example of Fig. 8, the following five growth models of the pansy are illustrated.

In other words, in Fig. 8, five types of pansy growth models, that is, an initial growth model V based on the default recommendation value, a growth model W of a season a (hereinafter, for example, the season a is "spring") in a place A (hereinafter, for example, the place A is "Shikoku"), a growth model X of a season b in Shikoku (hereinafter, for example, the season b is "Fall"), a growth model Y of spring in a place B (hereinafter, for example, the place B is "Hokkaido"), and a growth model Z of fall in Hokkaido are generated.

The growth model by the default recommendation value is the initial growth model V generated as the default model initially. Further, as the cultivation environment, it is divided into four groups of the "spring of Shikoku," the "fall of Shikoku," the "spring of Hokkaido," and the "fall of Hokkaido," and the growth model updated on the basis of an analysis result of the cultivation information related to the pansy which is actually acquired for the four groups are the growth models W to Z for the "spring of Shikoku," the "fall of Shikoku," the "spring of Hokkaido," and the "fall of Hokkaido." Each cultivation parameter recommendation value illustrated in Fig. 8 is merely an example and may be different from an actual value.

Specifically, for example, the growth model W of the "spring of Shikoku" is a growth method obtained by updating the initial growth model V based on the default recommendation value on the basis of the cultivation information transmitted to the cultivation management server 3 by the user terminals 2 and the planters 1 of a plurality of users U cultivating the pansy in Shikoku in the spring.

For example, similarly, the growth model X of the "fall of Shikoku" is a growth method obtained by updating the initial growth model V on the basis of the cultivation information transmitted to the cultivation management server 3 by the user terminals 2 and the planters 1 of a plurality of users U cultivating the pansy in Shikoku in the fall.

For example, the growth model Y of the "spring of Hokkaido" is a growth method obtained by updating the initial growth model V on the basis of the cultivation information transmitted to the cultivation management server 3 by the user terminals 2 and the planters 1 of a plurality of users U cultivating the pansy in Hokkaido in the spring.

For example, the growth model Z of the "fall of Hokkaido" is a growth method obtained by updating the initial growth model V on the basis of the cultivation information transmitted to the cultivation management server 3 by the user terminals 2 and the planters 1 of a plurality of users U cultivating the pansy in Hokkaido in the fall.

Here, if the growth model V is compared with the growth model W, the "season a (spring)" is recommended in the growth model V for the "sowing period" of the seed of the pansy among the cultivation parameters. In contrast, in the growth model W, the season a (spring) is regarded as "⊙ (optimum)" as the cultivation parameter recommendation value. For the "germination period optimum temperature," "20 to 25°C" is recommended in the growth model V, whereas "21°C" is regarded as being optimal in the growth model W as the cultivation parameter recommendation value. For the "growing period optimum temperature," "15 to 30°C." is recommended in the growth model V, whereas in growth model W, "21°C" regarded as being optimal in the growth model W as the cultivation parameter recommendation value. For the "number of days until germination," "about 1 to 2 W (weeks)" is regarded as being appropriate in the growth model V, whereas "1 to 2 W (weeks) is regarded as being appropriate in the growth model W as the "cultivation parameter recommendation value." For the "minimum necessary moisture amount," "15%" is recommended in the growth model V, while "17%" is regarded as being optimal in the growth model W as the cultivation parameter recommendation value. For the "appropriate moisture amount," "60%" is recommended in the growth model V, while "63%" is regarded as being optimal in the growth model W as the cultivation parameter recommendation value. For the "minimum necessary sunlight amount," "1500 lx" is recommended in the growth model V, whereas "1800 lx" is regarded being optimal in the growth model W as the cultivation parameter recommendation value. For the "the number of thinning," "3 to 5 stock s" is recommended in the growth model V, whereas "4 stocks" is regarded being optimal in the growth model W as the cultivation parameter recommendation value. For the "artificial pollination," "unnecessary" is regarded in the growth model V, whereas "-(unnecessary)" is regarded in the growth model W as the cultivation parameter recommendation value. As described above, since the default recommendation value is based on general information, the recommendation value obviously has a relatively wide range. In contrast, since the cultivation parameter recommendation value is generated on the basis of various kinds of the cultivation information, the recommendation value has a narrow range (a high concreteness) corresponding to individual specific circumstances. Therefore, the cultivation parameter recommendation value is more credible to the user U.

Further, as an example in which the pansy is tried to be cultivated in different seasons (the season a (spring) and the season b (fall)) in the same place B (Hokkaido), the cultivation parameter recommendation values of the growth model Y and the growth model Z are compared. In accordance with this comparison, for the "sowing period" of the seed of the pansy among the cultivation parameters, the "season a (spring)" is regarded as being "O (appropriate)" in the growth model Y. In contrast, the "season b (fall)" is regarded as being "X (inappropriate)" in the "growth model Z." For the "germination period optimum temperature," "15°C" is regarded as being optimal in the growth model Y, whereas "5°C" is regarded as being optimal in the growth model Z. For the "growing period optimum temperature," "16°C" is regarded as being optimal in the growth model Y, whereas "8°C" is regarded as being optimal in the growth model Z. For the "number of days to germination," "1 to 2.5 W (weeks)" is regarded as being appropriate in the growth model Y, whereas "2 to 4 W

(weeks)" is regarded as being appropriate in the growth model Z. For the "minimum necessary moisture amount," "30%" is recommended in the growth model Y, whereas "35%" is recommended in the growth model Z. For the "appropriate moisture amount," "70%" is regarded as an appropriate amount in the growth model Y, whereas "75%" is regarded as an appropriate amount in the growth model Z. For the "minimum necessary sunlight amount," "1700 lx" is recommended in the growth model Y, whereas "1600 lx" is recommended in the growth model Z. For the "number of thinning," "2 stocks" is recommended in the growth model Y, whereas "3 stocks" is recommended in the growth model Z. For the "artificial pollination," "- (unnecessary)" is regarded in the growth model Y, whereas "- (unnecessary)" is regarded in the growth model Z. As described above, even though the cultivation place is in the same region, if the cultivation seasons are different, the cultivation parameter recommendation value (suitable value) also differs for each growth model. That is, even in a case in which the same kind of pansy is cultivated, if the cultivation environments are different (in the example of Fig. 8, if the place information (γ) and the season information (α) are different), the cultivation parameter recommendation values (suitable values) are also different, and thus it is necessary to generate and update the growth model for each cultivation environment.

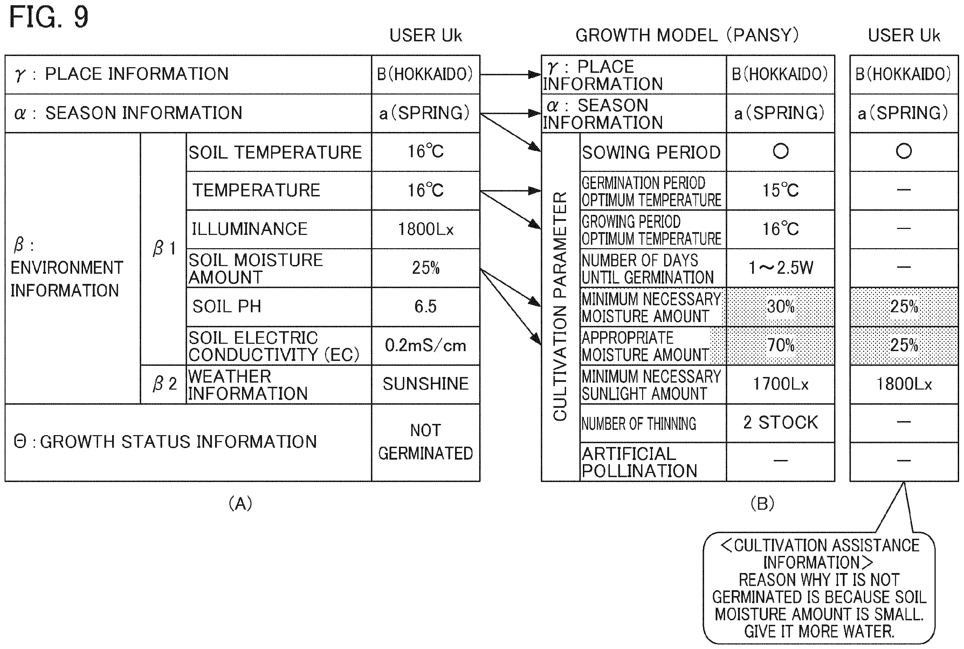

Fig. 9 is a diagram for specifically describing a process in which the cultivation management server 3 of the cultivation assistance system in Fig. 1 generates the cultivation assistance information for the user Uk of the assistance target using the growth model of Fig. 8.

Fig. 9(A) illustrates the cultivation information at a certain point for the pansy cultivated by the user Uk using the planter 1-k. Further, Fig. 9(B) illustrates a relation between the information obtained by processing the cultivation information related to the pansy cultivated by the user Uk using the planter 1-k and the growth model.

That is, the user Uk who cultivates the pansy in the place B (Hokkaido) transmits information indicating that it is not germinated to the cultivation management server 3 as the growth status information (θ) among the cultivation information of the pansy by manipulating the user terminal 2-k at a certain timepoint in the season a (spring). Further, the planter 1-k transmits the place information (γ), the season information (α), and the environment information (β) to the cultivation management server 3 as the cultivation information of the pansy. The environment information (β) includes the environment information (β1) such as the soil temperature or the soil moisture amount and the weather-related information (β2). The weather information (β2) is transmitted from the weather data management server 4 to the cultivation management server 3. The cultivation information acquisition unit 510 of the management server 3 acquires the cultivation information related to various species of pansies transmitted from the user terminal 2-k, the planter 1-k, and the weather data management server 4. Further, the cultivation information acquisition unit 510 provides the cultivation information comparing unit 810 with the information related to the coincidence point and the difference between the acquired cultivation information and the previous cultivation information related to the pansy stored in the cultivation information history DB 711.

The cultivation information illustrated in Fig. 9(A) is raw data and thus unable to be compared directly with the growth model of Fig. 7. In this regard, the cultivation information comparing unit 810 processes the cultivation information of Fig. 9(A) into information which can be compared with the growth model. As a result, the processing information illustrated on the right side of Fig. 9(B) is generated. Accordingly, it is possible to compare the cultivation information related to the pansy cultivated by the user Uk with the growth model of the pansy which causes the place information (γ) and the season information (α) to be identical to those of the pansy cultivated by the user Uk.

Then, the cultivation information comparing unit 810 compares the processing information illustrated on the right side of Fig. 9(B) with the growth model illustrated on the left side of Fig. 9(B). The growth model illustrated on the left side of Fig. 9(B) is the same growth model as the growth model Y of the "spring of Hokkaido" among the growth models illustrated in Fig. 8.

On the basis of the comparison result obtained by the cultivation information comparing unit 810, the cultivation assistance information generation unit 811 generates the cultivation assistance information used when the user Uk residing in Hokkaido cultivates the pansy in the spring using the planter 1-k.

Here, information (that is, the "minimum necessary moisture amount" and the "appropriate moisture amount") indicated by hatching among the cultivation parameters illustrated in Fig. 9(B) are used as the basis when the cultivation assistance information generation unit 811 generates the cultivation assistance information. That is, in the growth model, the minimum necessary moisture amount is 30%, and the appropriate moisture amount is 70%. In contrast, both the minimum necessary moisture amount and the appropriate moisture amount of the processing information are 25%. Therefore, the cultivation assistance information generation unit 811 generates the cultivation assistance information intended for recommending increasing the soil moisture amount of the planter 1-k. If the cultivation assistance information is generated by the cultivation assistance information generation unit 811, the information transmission control unit 812 executes control such that the cultivation assistance information is transmitted to the user terminal 2-k. Specifically, for example, a message "The reason why it is not germinated is because the soil moisture amount is small. Give it more water." is generated as the cultivation assistance information and transmitted to the user terminal 2-k of the user Uk. Accordingly, the user Uk who has received the message serving as the cultivation assistance information can understand that in order to germinate the pansy cultivated by the user Uk, it is necessary to give it more water.

Fig. 10 is a diagram illustrating an example different from the example of Fig. 8 among the examples of the growth model used in the cultivation assistance system of Fig. 1.

In the example of Fig. 10, a graph illustrating a temporal change in the SOIL value in a case in which a vertical axis indicates the SOIL value, and a horizontal axis indicates the number of days. The cultivation assistance system of Fig. 1 can employ the graph illustrating temporal information of the SOIL value as the growth model. As described above, the SOIL value is a value serving as an index indicating the state of the soil (hereinafter referred to as an "index value"). The SOIL value means a value obtained by using the method for measuring the crop cultivation frequency of the soil disclosed in WO 2011092860 A. That is, the SOIL value is a value indicating diversity or an activity value of soil microorganisms, and it means that the soil having the SOIL value within a predetermined preferred range is abundant in variety of microorganisms or the number of microorganisms.

Here, a case in which the growth model V, the growth model X, and the growth model Y among the five types of growth models V to Z described in the example of Fig. 8 are plotted in the graph of Fig. 10 will be described as an example. That is, as illustrated in Fig. 10, in a case in which the cultivation information of the pansy is not yet acquired, the default growth model V is indicated by a SOIL curve Lv indicating the temporal change in the SOIL value.

Further, the growth model X in a case in which the pansy is cultivated in the season b (fall) in the place A (Shikoku) is indicated by a curve Lx. Further, the growth model Y in a case in which the pansy is cultivated in the season a (spring) in the place B (Hokkaido) is indicated by a curve Ly.

The three growth models illustrated in Fig. 10 are models in which the SOIL value starts to decrease after maintaining a high level for a certain period of time, but it is understood that if the cultivation environment is different (in the example of Fig. 10, the place information (γ) and the season information (α) are different), a way in which the SOIL value decreases (the shape of the curve indicating the change) is also different.

Even in a case in which the growth model of the example of Fig. 10 is employed, the method of generating the cultivation assistance information by the cultivation management server 3 is basically similar to the case in which the growth model of the example of Fig. 7 is employed. That is, the user Uk who cultivates the pansy in the place B (Hokkaido) transmits information indicating that the it is not germinated among the cultivation information related to the pansy to the cultivation management server 3 as the growth status information (θ) by manipulating the user terminal 2-k at a certain time point in the season a (spring). Further, the planter 1-k transmits the place information (γ), the season information (α), and the environment information (β1) to the cultivation management server 3 as the cultivation information related to the pansy. The environment information (β) includes the environment information (β1) such as the soil temperature and the soil moisture amount and the weather-related information (β2). The weather information (β2) is transmitted from the weather data management server 4 to the cultivation management server 3.

The cultivation information acquisition unit 510 of the management server 3 acquires the cultivation information related to various species of pansies transmitted from the user terminal 2-k, the planter 1-k, and the weather data management server 4. Further, the cultivation information acquisition unit 510 provides the cultivation information comparing unit 810 with the information related to the coincidence point and the difference between the acquired cultivation information and the previous cultivation information related to the pansy stored in the cultivation information history DB 711.

In this regard, the cultivation information comparing unit 810 processes the cultivation information of Fig. 9(A) into information which can be compared with the growth model. As a result, the processing information illustrated on the right side of Fig. 9(B) is generated. Accordingly, it is possible to compare the cultivation information related to the pansy cultivated by the user Uk with the growth model of the pansy which causes the place information (γ) and the season information (α) to be identical to those of the pansy cultivated by the user Uk. The cultivation information illustrated in Fig. 9(A) is raw information and thus unable to be compared directly with the growth model in Fig. 7. In this regard, the cultivation information comparing unit 810 processes the cultivation information of Fig. 9(A) into information which can be compared with the growth model. Accordingly, it is possible to estimate the SOIL value at a predetermined timing. The method of estimating the SOIL value is not particularly limited, and an arbitrary method can be employed.

The cultivation information comparing unit 810 plots the SOIL value of the planter 1-k estimated at each timing as described above into the SOIL graph of Fig. 10. In the example of Fig. 10, a SOIL value SOk indicated by a black star is an estimated SOIL value of the planter 1-k. Then, the cultivation information comparing unit 810 compares the processing information (the temporal information of the SOIL value SOk) with the growth model Y indicated by the SOIL curve Ly. At this time, the cultivation information comparing unit 810 detects the coincidence point and the difference D.

The cultivation assistance information generation unit 811 generates the cultivation assistance information used when the user Uk cultivates the pansy on the basis of the coincidence point and the difference D detected as a comparison result obtained by the cultivation information comparing unit 810. Specifically, for example, the reason why the SOIL value of the soil of the planter 1-k of the user Uk is lower than that of the growth model Y may be determined to be the decline of the diversity of microorganisms contained in the soil. In this case, the cultivation assistance information generation unit 811 generates the measures to be taken by the user Uk in order to increase the diversity of microorganisms contained in the soil of the planter 1-k as the cultivation assistance information. At this time, as the measures to be taken by the user Uk which can be generated as the cultivation assistance information, for example, the measures of replacing the soil used in the planter 1-k with the soil more suitable the plant cultivation may be considered. Specifically, for example, the measures of replacing the soil with the artificial culture soils made of ecological raw materials that are sustainable and not hurting the earth or the soils containing a large amount of microorganisms that reproduce high biodiversity. If the cultivation assistance information generation unit 811 generates information including the measures to be taken by the user Uk as the cultivation assistance information, the cultivation assistance information transmission unit 812 transmits the cultivation assistance information to the user terminal 2-k of the user Uk. Accordingly, the user Uk who has acquired the cultivation assistance information can understand that the SOIL value can be increased by replacing the soil being currently used with the soil recommended as the cultivation assistance information. The service provider (not illustrated) that manages the cultivation management server 3 may provide the user Uk with the soil more suitable for plant cultivation in accordance with a timing at which the cultivation assistance information recommending the replacement of the soil used in the planter 1-k is transmitted from the cultivation management server 3. Accordingly, the user Uk can save the time and efforts for selecting and purchasing the soil. Further, the cultivation management server 3 may transmit a message for encouraging a special capsule containing microorganisms that produce soil nutrients to be embedded into the soil at a predetermined timing to the user terminal 2-k.

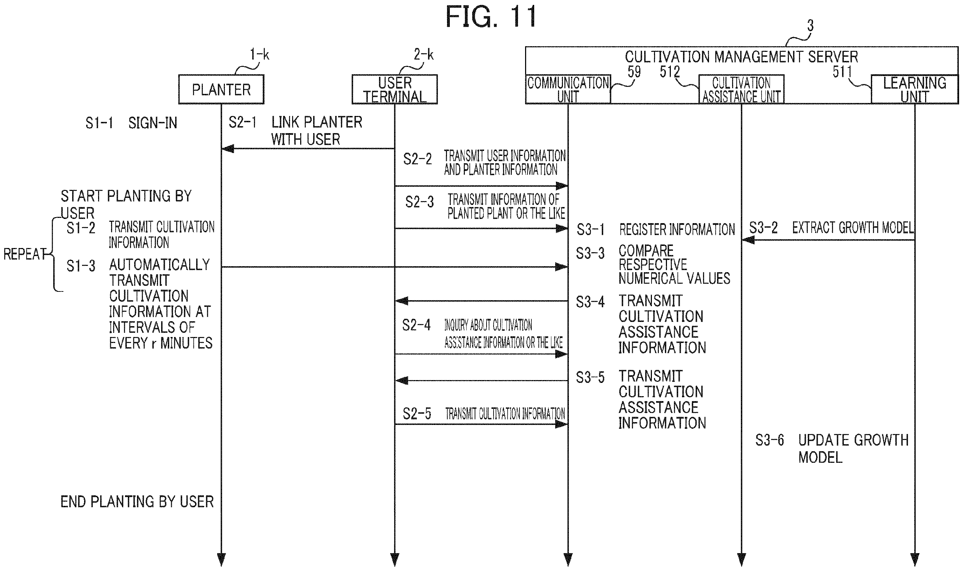

Next, a process until the growth model is updated in the cultivation management server 3 after the planter 1-k accepts the sign-in of the user Uk of the cultivation assistance target among the processes executed by the information processing system of Fig. 1 will be described with reference to Fig. 11.

Fig. 11 is a flowchart for describing the process until the growth model is updated in the cultivation management server 3 after the planter 1-k accepts the sign-in of the user Uk of the cultivation assistance target.

In step S1-1, the planter 1-k accepts the sign-in of the user Uk. In step S2-1, the user terminal 2-k links itself with the planter 1-k. In step S2-2, the user terminal 2-k transmits information for registering the user Uk and the planter 1-k in the cultivation assistance system to the cultivation management server 3. The cultivation management server 3 receives the information and registers the user Uk and the planter 1-k in the cultivation assistance system. Upon completion of the registration of the user Uk and the planter 1-k in the cultivation assistance system, the user Uk starts to plant the pansy using the planter 1. Further, the user Uk inputs information related to the pansy which has started to be cultivated by manipulating the user terminal 2-k. In step S2-3, the user terminal 2-k transmits the information related to the pansy input by the user Uk to the cultivation assistance system 3.

In step S3-1, the cultivation management server 3 receives the information related to the pansy transmitted by the user terminal 2-k, and registers the information of the pansy planted in the planter 1-k in the cultivation assistance system. In step S3-2, the cultivation assistance unit 511 of the cultivation management server 3 extracts an appropriate growth model from among the growth models stored in the growth model DB 712. Specifically, from among the latest growth models which are learned and updated by the learning unit 511, the growth model of the pansy which is planted in the planter 1-k by the user Uk and suitable for the cultivation environment of the planter 1-k is extracted.

In step S1-2, the planter 1-k transmits the elements of the cultivation information of the pansy planted in itself to the cultivation management server 3. Automatic transmission of the elements of the cultivation information can be set to be performed at predetermined time intervals. For example, automatic transmission can be set to be performed at intervals of r minutes (r is an arbitrary integer value of 1 or more). Such automatic transmission at intervals of r minutes is described as one step S1-3 in Fig. 11 for the sake of convenience. As described above, the elements of the cultivation information are transmitted not only from the planter 1-k but also from the user terminal 2-k.

In step S3-3, the cultivation assistance unit 512 of the cultivation management server 3 compares the elements (numerical values) of the cultivation information or the processing information thereof with the growth model extracted in step S3-1 and detects the coincidence point and the difference. In step S3-4, the cultivation assistance unit 511 of the cultivation management server 3 generates the cultivation assistance information on the basis of the processing result of step S3-3, and transmits the cultivation assistance information to the user terminal 2-k. At this time, for example, the user Uk may acquire the cultivation assistance information via an application being executed by the user terminal 2-k. The cultivation assistance information may include, for example, the message "Since the sunlight amount is small, let's move the planter 1-k to the sunny place." Therefore, the user Uk can specifically understand what to do to cultivate the pansy well.

In step S2-4, the user terminal 2-k (for example, an application being executed in the user terminal 2-k) inquiries about the current cultivation assistance information or other information displayed on the user terminal 2-k (for example, summary information provided in the application) on the basis of a manipulation performed by the user Uk who has viewed the cultivation assistance information if necessary. In step S3-5, the cultivation assistance unit 512 of the cultivation management server 3 transmits a response to the inquiry from the user terminal 2-k in step S2-4 to the user terminal 2-k as the cultivation assistance information. Accordingly, the user Uk can deepen understanding and interest in the cultivation assistance information.

In step S2-5, the user terminal 2-k transmits the cultivation information related to the pansy to the cultivation management server 3. The transmitted cultivation information is stored and accumulated in the cultivation information history DB 711. As described above, the cultivation information related to the pansy of the planter 1-k which is the cultivation assistance target is naturally useful information as progress information of the pansy being actually cultivated and thus is one piece of information necessary when the growth model of the pansy is updated. In step S3-6, the learning unit 511 of the cultivation management server 3 updates the growth model of the pansy on the basis of the cultivation information related to the pansy acquired from the user terminal 2-k. As described above, the generation of the growth model and the provision of the cultivation assistance information to the user Uk are repeatedly performed.

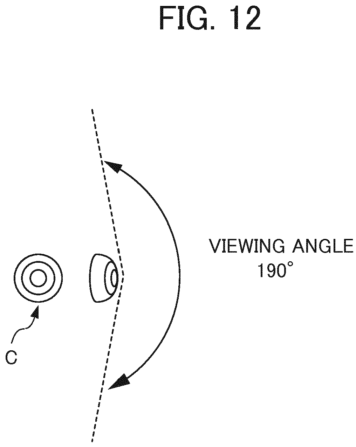

Next, a method of acquiring the captured image of the plant included in the cultivation information transmitted from the planter 1 to the cultivation management server 3 will be described. Fig. 12 is a diagram for describing a viewing angle of the camera C constituting the imaging unit 103 of the planter 1.

As illustrated in Fig. 12, by setting the viewing angle of the camera to 190 degrees, it is possible to prevent the plant cultivated by using the planter 1 from protruding from the captured image with the growth.

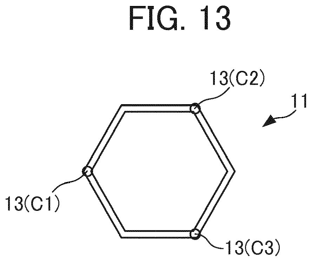

Fig. 13 is a plan view illustrating an arrangement example of the imaging unit 103 constituting the system unit portion 11 of the planter 1.

In the arrangement example of the imaging unit 103 illustrated in Fig. 13, cameras C1 to C3 are installed at three apexes of the system unit 11 having a substantially regular hexagonal shape. By installing the cameras C1 to C3 described above, it is possible to broaden the field of view in the captured image of the plant to be cultivated, and thus the cultivation management server 3 can acquire more accurate cultivation information.

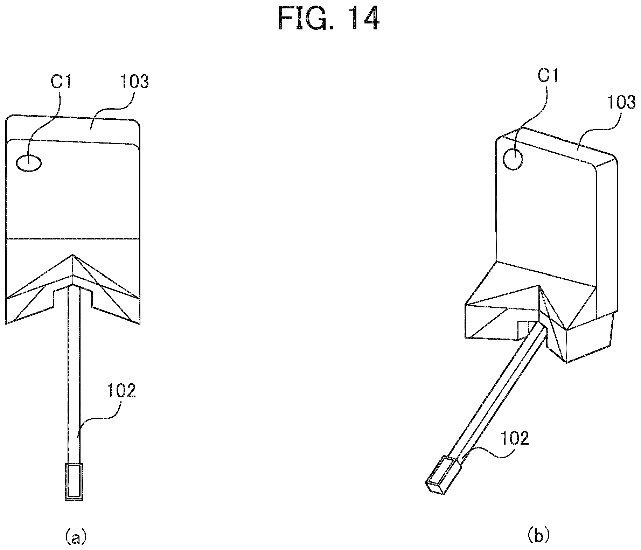

Fig. 14 is a diagram illustrating an example of a part of an external configuration of the system unit portion 11 of the planter 1. Fig. 14(a) is a front view illustrating an example of a part of the external configuration of the system unit portion 11 of the planter 1. Fig. 14(b) is a front perspective view illustrating an example of a part of the external configuration of the system unit portion 11 of the planter 1.

Fig. 14 illustrates an example in which the main camera C1 constituting the imaging unit 103 and a soil sensor 201 constituting the sensor unit 102 are integrally molded. The position of the camera C illustrated in Fig. 14 is not limited to that in the example in Fig. 14. The soil sensor 201 has a function of measuring the amount of water contained in the soil, a function of measuring the temperature of the soil, a function of measuring the acidity or basicity of the soil, and a function of measuring the electrical conductivity of the soil. As described above, since the imaging unit 103 and the sensor unit 104 are integrally molded, the planter 1 can be made compact, and the external appearance can give a smart impression to the viewer.

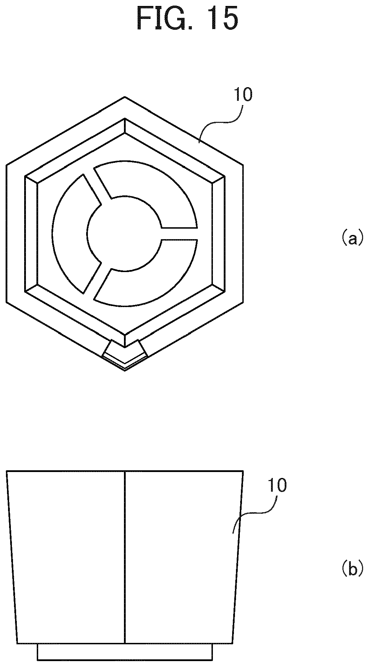

Fig. 15 is a diagram illustrating an example of an external configuration of the base portion 10 constituting the planter 1. Fig. 15(a) is a plan view illustrating an example of the external configuration of the base portion 10. Fig. 15(b) is a side view illustrating an example of the external configuration of the base portion 10.

As illustrated in Fig. 15, the base portion 10 of the planter 1 has portions that can implement general functions which are provided by general flower pots to cultivate plants such as a function of holding a predetermined amount of soil. The shape of the base portion 10 is not particularly limited. It is sufficient if general functions which are provided by general flower pots to cultivate plants such as a function of holding a predetermined amount of soil are provided. In the example of Fig. 15, the base portion 10 is configured to have a substantially hexagonal tubular shape having a bottom.

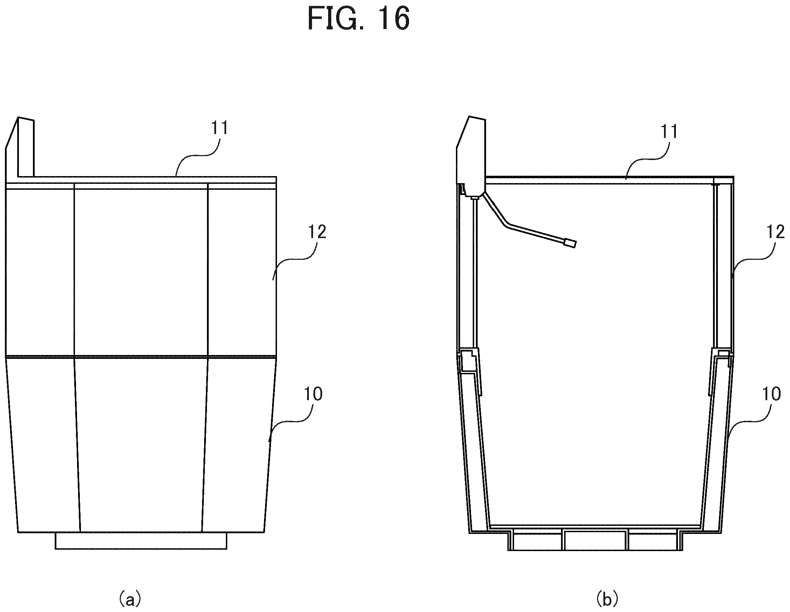

Fig. 16 is a diagram illustrating an example of an external configuration in a case in which the expansion unit 12 is attached to the base 10 constituting the planter 1. Fig. 16(a) is a side view illustrating an example of the external configuration of the planter 1 to which the expansion unit 12 is attached. Fig. 16(b) is a sectional view in a vertical direction illustrating an example of the external configuration of the planter 1 to which the expansion unit 12 is attached.

As illustrated in Fig. 16, since it is possible to increase the amount of soil which can be stored in the planter 1 when the expansion unit 12 is attached to the base portion 10 of the planter 1, it is possible to easily cultivate high-tall plants.

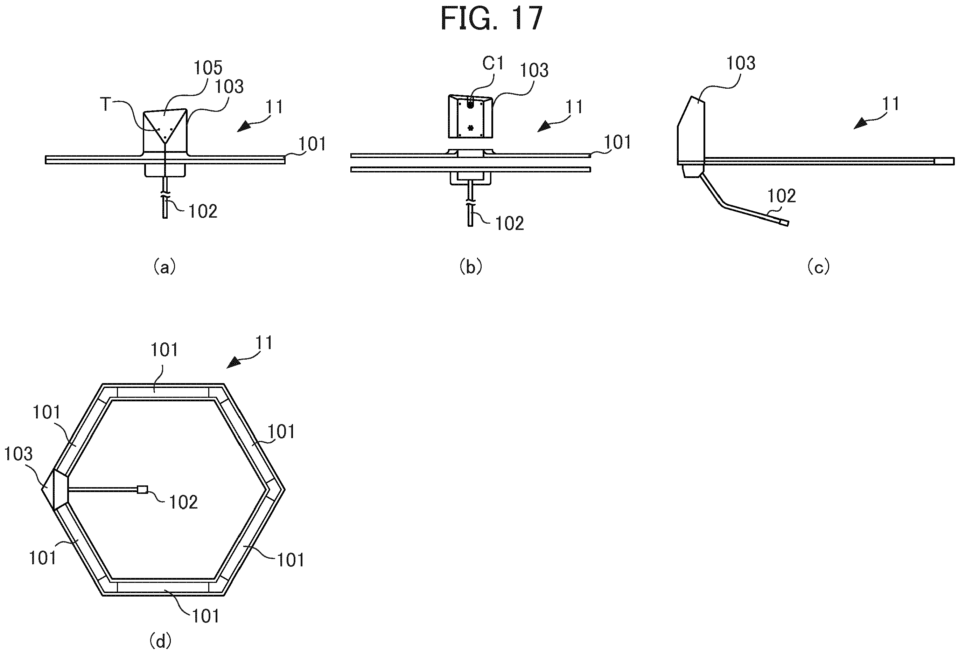

Fig. 17 is a diagram illustrating an example of an external configuration of the main system unit 11 constituting the planter 1.

Fig. 17(a) is a diagram in which a rear view illustrating an example of an external configuration of the main system unit 11 is divided into three parts, that is, the solar panel unit 101, the sensor unit 102, and the imaging unit 103. The solar panel unit 101 is the main system unit portion 11 includes the solar panel unit 101, a sensor unit 102, the imaging unit 103, the communication unit 104 (not illustrated), and the display unit 105. As described above, the solar panel 101 functions as a power securing unit for securing electric power for activating the sensor unit 102, the imaging unit 103, the wireless communication unit 104, and the display unit 105 in the planter 1. As described above, the sensor unit 102 functions as an acquisition unit for acquiring various kinds of elements constituting the cultivation information of the plant cultivated using the planter 1. The imaging unit 103 is constituted by one or more cameras C for imaging the plant cultivated using the planter 1. The imaging unit 103 in the example of Fig. 3 is constituted by three cameras C, that is, the main camera C1 and the sub cameras C2 and C3. Since the imaging unit 103 is constituted by a plurality of cameras as described above, it is possible to make the cultivation information acquired by the planter 1 more accurate. As described above, the wireless communication unit 104 performs transmission and reception of the cultivation information acquired by the sensor unit 102 and the cultivation assistance information generated by the cultivation management server 3 with the cultivation management server 3. The display unit 105 displays the cultivation information acquired by the sensor unit 102 as described above. Specifically, for example, it is possible to display the cultivation information such as the sunlight amount, the soil moisture amount, the soil temperature, the temperature, the humidity, the weather, the wind speed, the wind direction, and the like. A specific method of causing the cultivation information to be displayed on the display unit 105 will be described later with reference to Figs. 20 and 21.

Fig. 17(b) is a rear view illustrating an example of the external configuration of the main system unit 11. As illustrated in Fig. 17(b), the imaging unit 103 of the main system unit 11 can include an indicator T. The indicator T displays a battery level of the main system unit 11 and the state of the soil stored in the planter 1 with a plurality of patterns indicated by lighting (or blinking) of a light emitting diode (LED) lamp. Fig. 17(c) is a side view illustrating an example of the external configuration of the main system unit 11. As illustrated in Fig. 17(c), the main system unit 11 has a thin and compact shape and thus not become an obstacle when the plant is cultivated in the planter 1. Further, since the main system unit 11 is detachable, the maintenance can be easily performed. Fig. 17(d) is a plan view illustrating an example of the external configuration of the main system unit 11. As illustrated in Fig. 17(d), in the main system unit 11, the solar panel units 101 are arranged in the member having a substantially hexagonal shape to be installed along the upper end portion of the base portion 10 substantially without a gap. Accordingly, the planter 1 can receive sunlight efficiently without changing the direction of the planter 1 in accordance with an angle of sunlight.

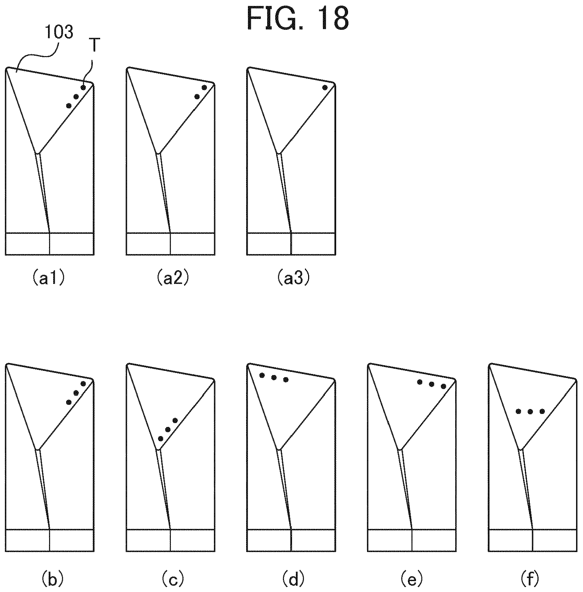

Fig. 18 is a diagram illustrating a specific example in a case in which the imaging unit 103 is configured to include the indicator.

Figs. 18(a1) to 18(a3) illustrate an example of an arrangement of indicators in a case in which the imaging unit 103 is configured to include the indicator. As illustrated in Figs. 18(a1) to 18(a3), three LED lamps are arranged as the indicator, and thus it is possible to visualize the battery level of the main system unit 11. Specifically, for example, as the battery level decreases, the number of LED lamps that are turned on can be reduced from three to two and from two to one. Figs. 18(b) to 18(f) illustrate another example of an arrangement of indicators in a case in which the imaging unit 103 is configured to include the indicator.

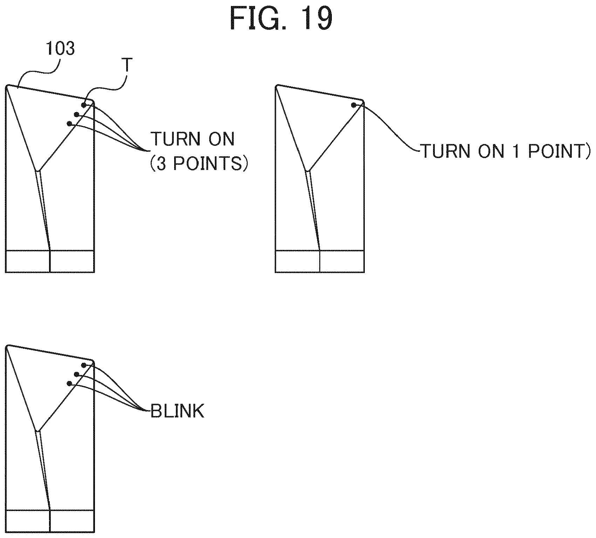

Fig. 19 illustrates a display example of the indicator T in a case in which the imaging unit 103 includes an LED lamp as the indicator T.

In the display example of the indicator T illustrated in Fig. 19, the battery level of the main system unit 11 and the state of the soil stored in the planter 1 are displayed by the indicator T. Specifically, for example, the number of LED lamps which are turned on decreases as the battery level of the main system unit 11 decreases, but all of the three LED lamps may blink in accordance with some a warning related to the soil temperature, the soil moisture amount, and the sunlight amount. Since the imaging unit 103 is configured to include the indicator T as described above, the user U can easily understand the battery level of the main system unit 11 and the state of the soil stored in the planter 1 merely at a glance of the planter 1.

Fig. 20 illustrates a specific example in which the cultivation information of the plant cultivated using the planter 1 is displayed on the display unit 105 of the main system unit 11.

In the example of Fig. 20, the display unit 105 displays the cultivation information such as the sunlight amount, the soil moisture amount, the soil temperature, the temperature, the humidity, the weather, the wind speed, the wind direction, and the like. Since the cultivation information image is displayed as described above, the user U can understand the cultivation information at a glance. As illustrated in Fig. 20, the elements of the cultivation information to be displayed on the display unit 105 may be divided into a plurality of groups so that the groups can be switched and displayed.

Fig. 21 illustrates another specific example in which the cultivation information of the plant cultivated using the planter 1 is displayed on the display unit 105 of the main system unit 11.

In the example of Fig. 21, LED lamps serving as an indicator T indicating the state of the illuminance, an indicator T indicating the state of the soil moisture amount, and an indicator T indicating the state of the soil temperature are arranged in the display unit 105. The indicator T can display the status at the time of imaging in the imaging unit 103. Specifically, for example, it is possible to cause an indication indicating a countdown from 10 seconds before imaging and an indication indicating an imaging moment to be displayed on the indicator T.

Fig. 22 illustrates a specific example in which the cultivation information of the plant cultivated using the planter 1 is displayed on the display unit 105 of the base portion 10.

In the example of Fig. 22, the cultivation information such as the sunlight amount, the soil moisture amount, the soil temperature, the temperature, the humidity, the weather, the wind speed, the wind direction, and the like are displayed on the display unit 105 in an image form, similarly to the example of Fig. 20. Further, it is also possible to display information related to the wireless status, the battery level, or the like in an image form.

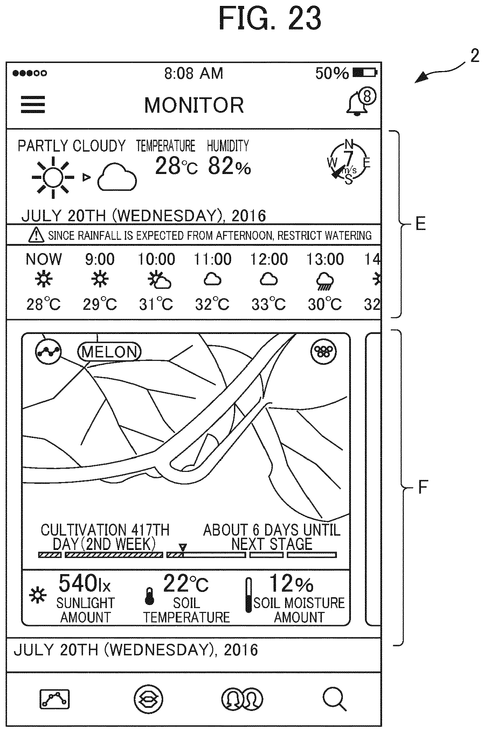

Fig. 23 is a diagram illustrating an example of a screen on which the captured image of the plant is displayed among the examples of the screen displayed on the user terminal 2.

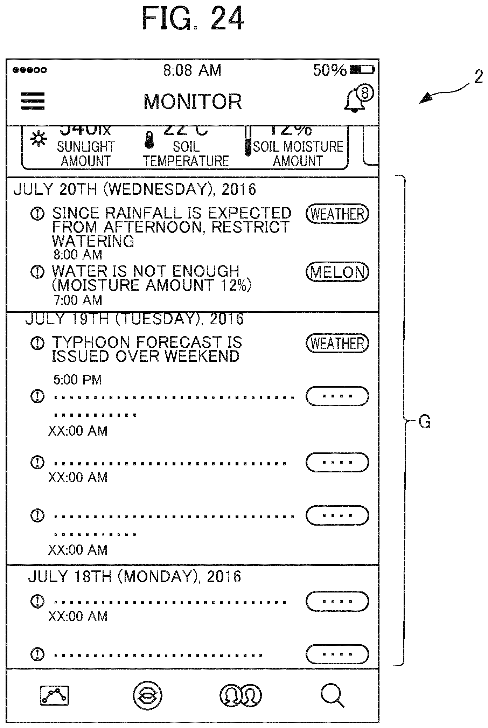

It is possible to cause information such as a date and time, the temperature, the humidity, the wind speed, the wind direction, and the like at the present time to be displayed in a display region E as illustrated in Fig. 23. Further, as an alert display, it is possible to display a message "Since the rainfall is expected from the afternoon, restrict watering." Further, the messages displayed on the display region E as the alert are displayed in a display region H to be described later with reference to Fig. 24 in a list form as an alert history. It is possible to cause information for the plant cultivated using the planter 1 such as a name (type), a captured image, the number of cultivation days, a sunlight amount, a soil temperature, a soil moisture amount, and the like to be displayed in the display region F. Further, it is also possible to display a button for switching the plant to be displayed, a button for displaying detailed information, and an approximate number of days until the next stage. Here, the "stage" in this specification means one unit in a case in which the lifetime of the plant cultivated using the planter 1 is divided into a plurality of stages. Specifically, for example, in a case in which the plant being cultivated is a melon, the lifetime of the melon can be divided into five types of stages, that is, a sowing stage, a germination stage, a flowering stage, a fruiting stage, and a harvest stage.

Fig. 24 is a diagram illustrating an example of a screen on which the alert history is displayed among the examples of the screen displayed on the user terminal 2.

As illustrated in Fig. 24, the messages displayed as the alerts in the display region described with reference to Fig. 23 are displayed in the display region G in a list form as the alert history. Specifically, for example, a message "water seems not to be enough (the moisture amount 12%) (melon)" as a message displayed as an alert at 7:00 AM on July 20th (Wednesday), 2016 and a message "a typhoon forecast is issued over the weekend (weather)" as a message displayed as an alert at 5:00 PM on July 19th (Tuesday), 2016 are displayed in a list form as the alert history.

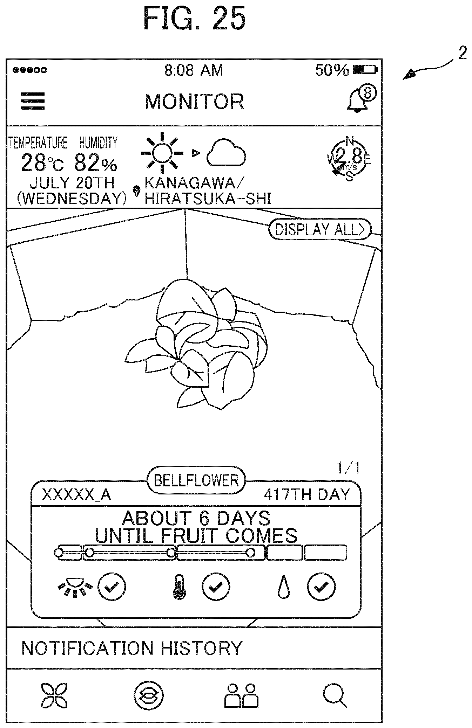

Figs. 25 to 27 are diagrams illustrating another example of a screen on which an image of the plant is displayed among the examples of the screen displayed on the user terminal 2.

In the example illustrated in Fig. 25, the captured image of the cultivated plant (bellflower) is displayed larger.

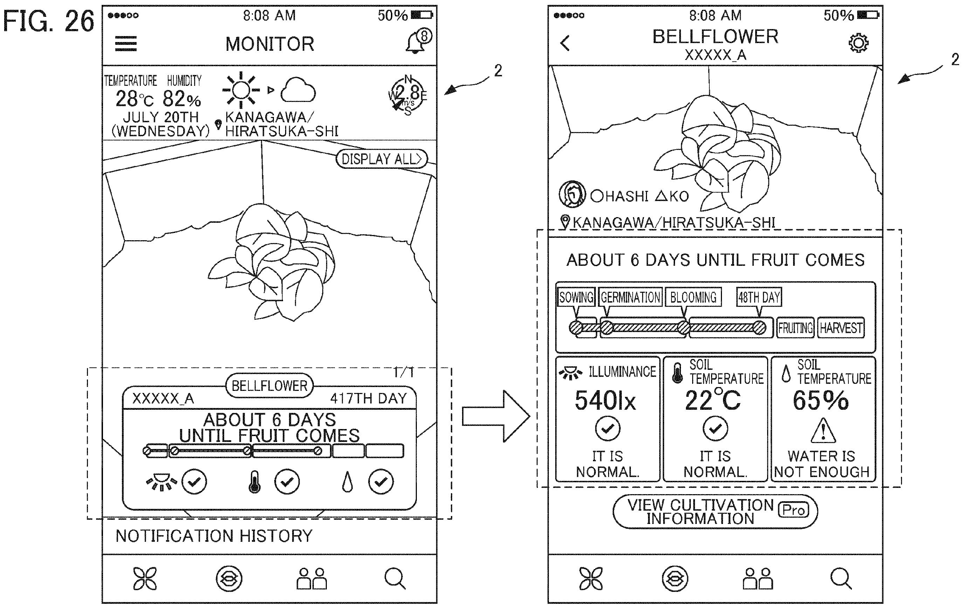

Fig. 26 is a diagram illustrating an example of the screen in which the cultivation information displayed in a partial area of the screen of the user terminal 2 illustrated in Fig. 25 is enlarged and displayed.

In the example of Fig. 26, specific numerical values of the illuminance, the soil temperature, and the soil moisture amount, and information indicating whether or not the numerical value is within a normal value range are displayed. Specifically, for example, "540 lx" is displayed as a specific numerical value of the "illuminance," and the numerical value is displayed to be "normal." Further, "22°C is displayed as a specific numerical value of the "soil temperature," and the numerical value is displayed to be "normal." Further, "65%" is displayed as the specific numerical value of the "soil moisture amount," and the numerical value is displayed to be "water is not enough."

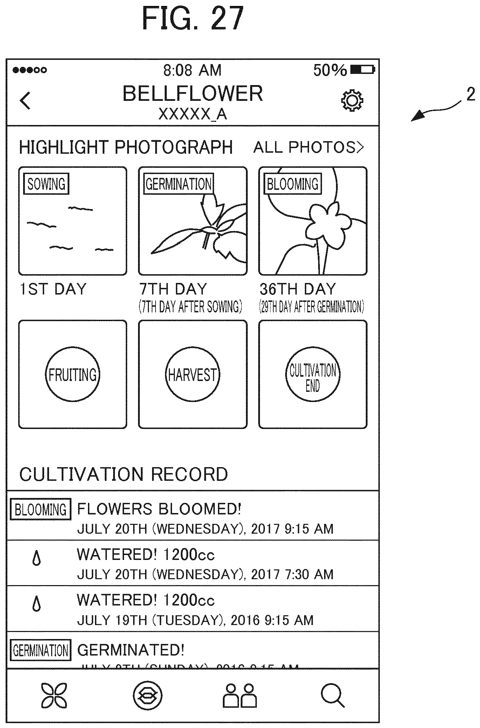

Fig. 27 illustrates " highlight picture (captured image)" of picked up plant (bellflower) and "cultivation record" of bellflower among examples of screen displayed on user terminal 2. As illustrated in Fig. 27, the image of the image of bellflower captured at each stage is displayed as a highlight picture. Specifically, for example, a captured image at the sowing stage which is captured on a first day after the cultivation is started, a captured image at the seeding stage which is captured on a seventh day (a seventh day after sowing) after the cultivation is started, and a captured image at the flowering stage which is captured on a 36th day (a 29th day after germination) after the cultivation is started are displayed as the highlight picture. Future stages (for example, the fruiting stage and the harvest stage) are displayed to be blank, and the highlight pictures are automatically added by determination of the cultivation management server 3 each time the stage advances. Further, the user U can freely change the highlight picture. Further, the cultivation history using the planter 1 is displayed in a "cultivation record." Specifically, for example, as the cultivation history indicating that it enters the flowering stage because the bellflower bloomed, "flowering," "flowers bloomed," and "9:15 AM, July 20th (Wednesday) 2016" are displayed. As described above, the user U can look back on the results (bellflower) of cultivation of the plant cultivated by the user U with photographs and writings.

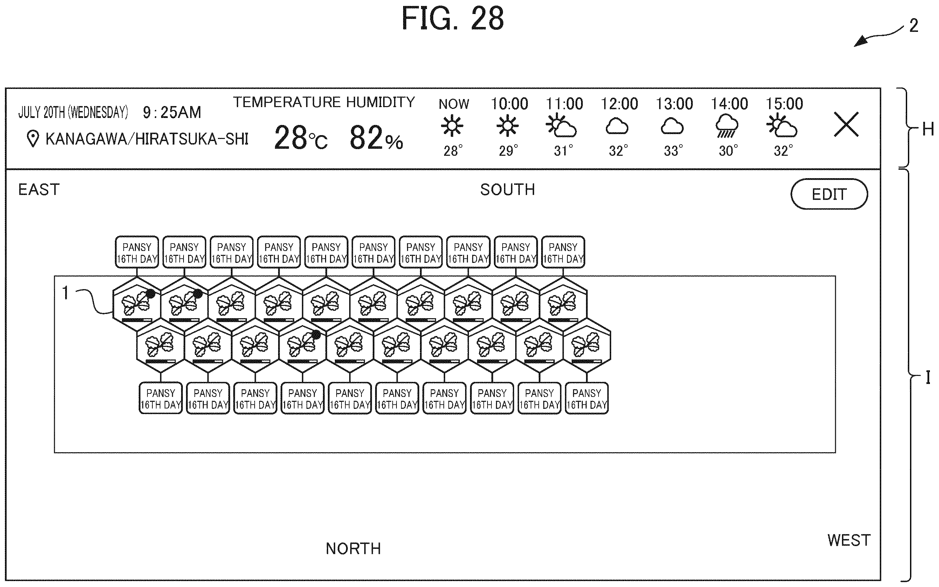

Fig. 28 is a diagram illustrating an example of a screen in which a plurality of planters 1 cultivated by the user U are displayed in a list form among the examples of the screen displayed on the user terminal 2.

As illustrated in Fig. 28, a plurality of planters 1 cultivated by the user U can be displayed on the user terminal 2 in a list form. In the example of Fig. 28, 20 planters 1 cultivated by the user U are displayed in a list form in accordance with an actual arrangement of the planters 1. The information related to a date, a time, a place, a temperature, a humidity, and a weather among the cultivation information of the planter 1 is displayed in the display region H. Specifically, for example, information such as "9:25 AM, July 20th (Wed)," "Hiratsuka City, Kanagawa Prefecture," "air temperature 28°C.," "humidity 82%," and the current weather and temperature, and the weather forecast is displayed. Among the cultivation information of the planter 1, information such as the actual arrangement of a plurality of planters 1 including information related to a direction, names (species) of the plants cultivated in a plurality of planters, a captured image, and the number of cultivation days can be displayed in the display region I.

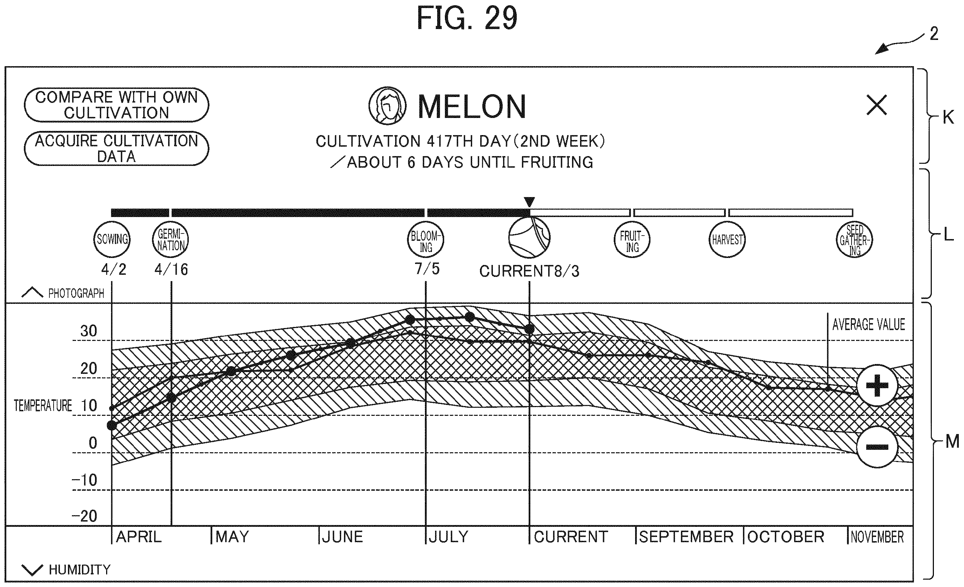

Fig. 29 is a diagram illustrating an example of a screen in which the cultivation information of each species of plant is displayed in a graph form among the examples of the screen displayed on the user terminal 2.

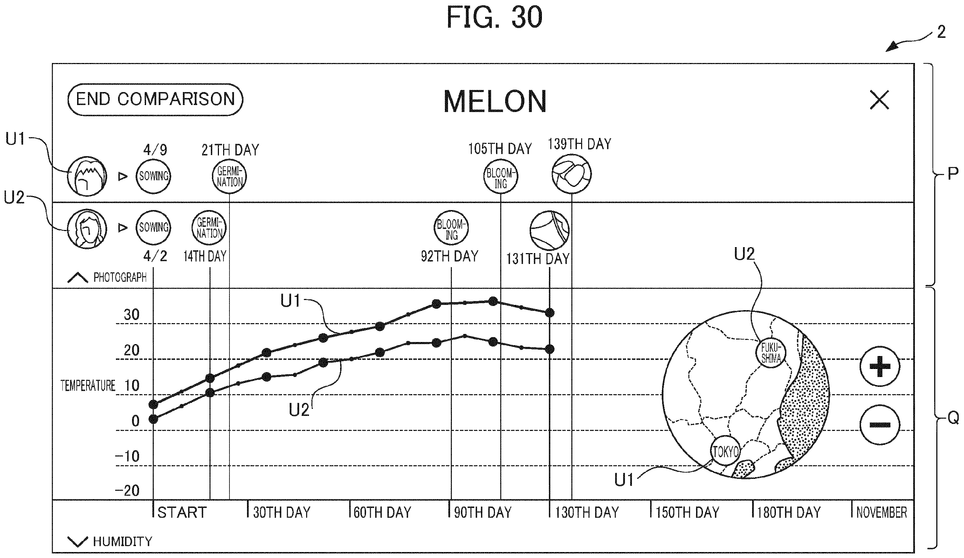

As illustrated in Fig. 29, it is possible to display the cultivation information of the plant cultivated using the planter 1 in a graph form for each element. In the example of Fig. 29, the "temperature" among the cultivation information of the melon cultivated by the user U is displayed in a graph form. A thumbnail image indicating the user U, a plant (species) name, the number of cultivation days, an expected number of days until it enters the fruiting stage, and the like can be displayed in the display region K. Further, a button for displaying a graph obtained by comparing the cultivation information of another user U with the cultivation information of the user (a "compare with own cultivation" button in the example of Fig. 29) in a case in which the cultivation information being displayed is that of another user U can be installed. A specific method of comparing with the cultivation information of a plurality of users U will be described later with reference to Fig. 30. Further, a button for saving the cultivation information being displayed as reference information (an "acquire cultivation data" button in the example of Fig. 29) can be installed. The progress information of each stage among the cultivation information can be displayed in the display region L. Specifically, for example, information indicating that it entered the sowing stage on April 2nd, information indicating that it entered the sowing stage on April 2nd, information indicating that it entered the germination stage on April 16th, information indicating that it entered the flowering stage on July 5th, the current stage, and the like can be displayed. Graph information can be displayed in the display region M for each piece of cultivation information. In the example of Fig. 29, the "air temperature" among the cultivation information is displayed as a line graph. Further, an average value can be plotted in the line graph. It is also possible to freely switch the type of the cultivation information displayed in the display region M by manipulating user terminal 2. Specifically, for example, in the example of Fig. 29, the temperature is displayed, but it can be switched to the humidity, sunlight amount, the soil temperature, the soil moisture amount, or the like. A switching method is not particularly limited, but it is possible to switch by swiping the display region M up or down with a finger of the user U. Further, the graph displayed in the display region M can be enlarged or reduced. Accordingly, it is possible to switch a unit of time displayed on the horizontal axis of the graph. Specifically, for example, the display position can be switched in units of years, months, days, or hours.

Fig. 30 is a diagram illustrating an example of a screen in which the cultivation information of a plurality of users U is plotted on the graph illustrated in Fig. 29.

As illustrated in Fig. 30, it is possible to plot the cultivation information of a plurality of the user U (the user U1 and U2) in a line graph form and compare it for a specific plant (melon). The progress information of each stage of a plurality of the user U (the users U1 and U2) can be displayed in the display region P. The graph information can be displayed in a display region Q for each piece of cultivation information. In the example of Fig. 30, the "air temperature" among the cultivation information is displayed as a line graph. Further, position information of a place in which the planters 1 (the planter 1-1 and the planter 1-2) of a plurality of users U (the users U1 and U2) which are comparison targets can be displayed in the display region Q in a map form. Accordingly, the user U can understand a difference in the numerical value of the cultivation information which can occur due to a difference in an installation place. Thus, it is possible to compare the cultivation information of a plurality of users U easily. It is also possible to compare with the growth model for generating the cultivation assistance information using a comparison graph of the cultivation information of the plurality of users U. That is, in the example of Fig. 30, it is possible to compare the cultivation information between the user U1 and the user U2, but it is possible to switch the user U1 to the growth model and compare the cultivation information of the growth model and the user U2.

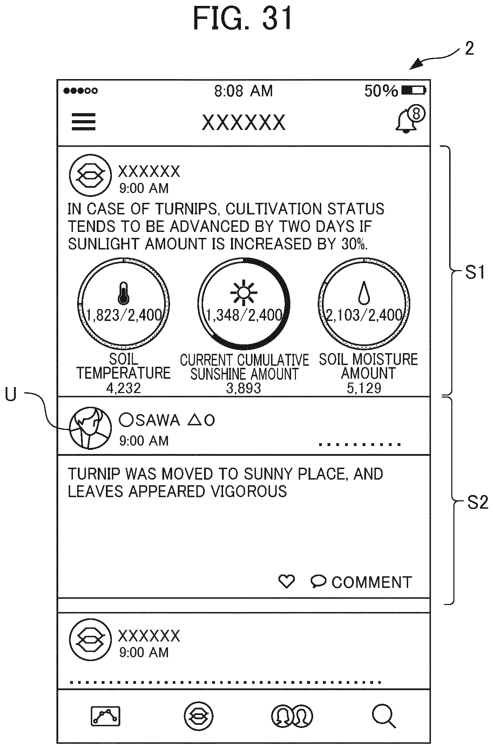

Fig. 31 is a diagram illustrating an example of a screen on which the cultivation assistance information is displayed among the examples of the screen displayed on the user terminal 2.

As illustrated in Fig. 31, the user terminal 2 can cause the message from the cultivation management server or the message from the user U to be displayed as information for assisting the user U who manipulates the user terminal 2 in the cultivation. Accordingly, it is possible to develop the provision of the cultivation assistance information to the user U of the cultivation assistance target, the inquiry about it from the user U, other writing, or the like on a thread. The message from the cultivation management server (the cultivation assistance information) or the message from the user U is displayed in display region S1 and S2. Specifically, for example, it is possible to causes a message "In the case of turnips, the cultivation status tends to be advanced by two days if the sunlight amount is increased by 30%" in the display region S1 as the message from the cultivation management server 3. At this time, a specific numerical value indicating the cultivation information may be displayed together with the message. In the example of Fig. 30, specific numerical values related to sunlight amount are displayed. Further, it is possible to a message "the turnip was moved to the sunny place, and the leaves appeared vigorous." in the display region S2 as the message from the user U.

Figs. 32 to 34 are diagrams illustrating examples of screens in which the plant relevant information is displayed among the examples of the screen displayed on the user terminal 2.

As illustrated in Figs. 32 to 34, the user terminal 2 can display the plant relevant information serving as the information related to the plant cultivated by the user U. A technique of causing the plant relevant information to be displayed on the user terminal 2 is not particularly limited. For example, as illustrated in Figs. 32 to 34, the message from the cultivation management server and the message from the user U may be displayed on display regions S3 and S4.

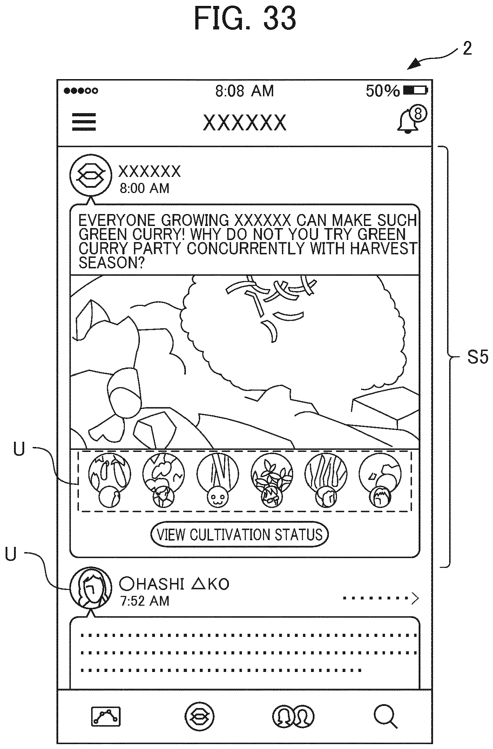

Fig. 32 illustrates an example in which an introduction of a recipe of a dish using a specific plant is displayed on the user terminal 2 as the plant relevant information provided from the cultivation management server 3. Specifically, for example, a recipe of Caprese which is a dish using mini tomato and basil is introduced in the display region S3 as the message (the plant relevant information) from the cultivation management server 3. At this time, a message indicating that a harvest period of a mini tomato and basil cultivated by a specific user U is close may be added to the message of the introduction, or captured images of the mini tomato and the basil cultivated by the specific user U may be displayed. The number of plants cultivated by the user U posted with the recipe is not limited. For example, as illustrated in Fig. 33, it is possible to cause plants cultivated by a large number of users U to be displayed in introduction of a recipe of green curry using various kinds of ingredients. Accordingly, it is possible to cause the user U to maintain motivation to cultivate plants or cause the user U to think of growing the plants used for a dish. A message "Thank you very much. I will try to make Caprese with basil grown by me quickly." can be displayed in the display region S4 as the message from the user U.

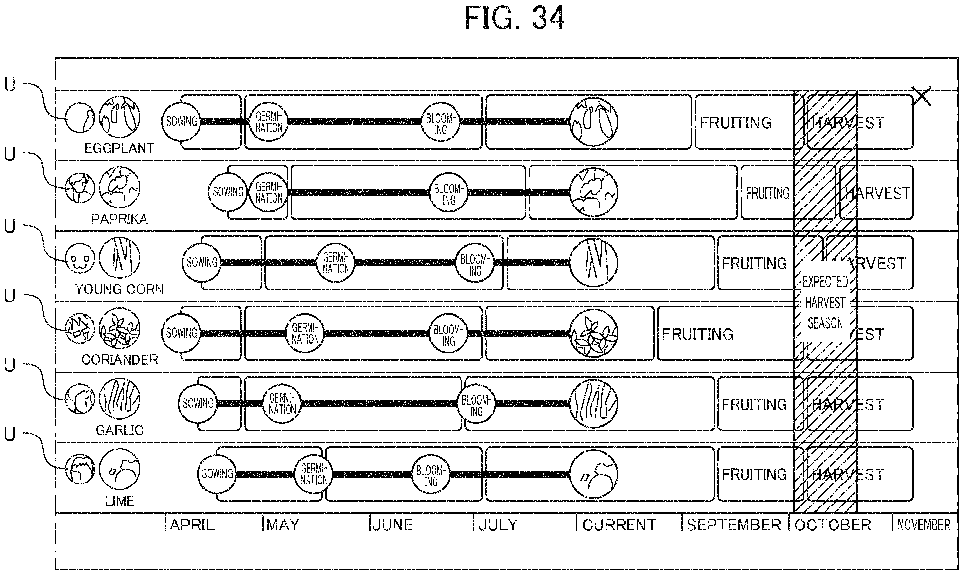

Fig. 33 illustrates another example in which an introduction of a recipe of a dish using a specific plant is displayed on the user terminal 2 as the plant relevant information provided from the cultivation management server 3. As described above, it is possible to cause the plants cultivated by a large number of users U to be displayed in the introduction of the recipe of a dish such as the green curry using various kinds of ingredients. In this case, a button for displaying the cultivation status of the plant cultivated by each of a large number of users U displayed in the display region S5 to be displayed on the user terminal 2 in a list form can be installed. In the example of Fig. 32, a "check cultivation status" button is displayed. A screen displayed on the user terminal 2 in a case in which the button is pressed, will be described later with reference to Fig. 34.

Fig. 34 is an example of a screen displayed on the user terminal 2 in a case in which the "view cultivation status" button illustrated in Fig. 33 is pressed. As illustrated in Fig. 34, if the "check cultivation status" button is pressed, the stages of the plants cultivated by a plurality of users U are displayed in a list form. Specifically, information related to the stage and a season expected as the harvest period are displayed for each of the users U who cultivate eggplant, paprika, young corn, cilantro leaf, garlic, and lime. Accordingly, each of the users U who cultivate the respective plants which are green curry ingredients can bring the plants (ingredients) harvested in the harvest period and hold a party to make the green curry together.

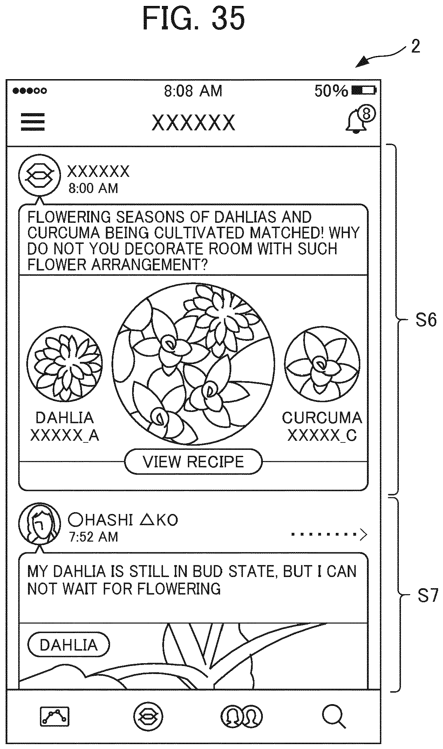

Fig. 35 is a diagram illustrating an example in which an introduction of a flower arrangement using a specific plant is displayed on the user terminal 2 as the plant relevant information provided from the cultivation management server 3. Specifically, for example, a flower arrangement using dahlia and curcuma is introduced in a display region S6 as a message (the plant relevant information) from the cultivation management server 3. At this time, a message indicating that flowering season of the dahlia and the curcuma cultivated by a specific user U are close may be added to the introduction message, or captured images of the dahlias and the curcumas cultivated by the specific user U may be displayed. Accordingly, it is possible to cause the user U to maintain motivation to cultivate plants or cause the user U to think of growing the plants used for the flower arrangement. Further, a message "My dahlia is still in a bud state but cannot wait for flowering," can be displayed in the display region S7 as the message from the user U.

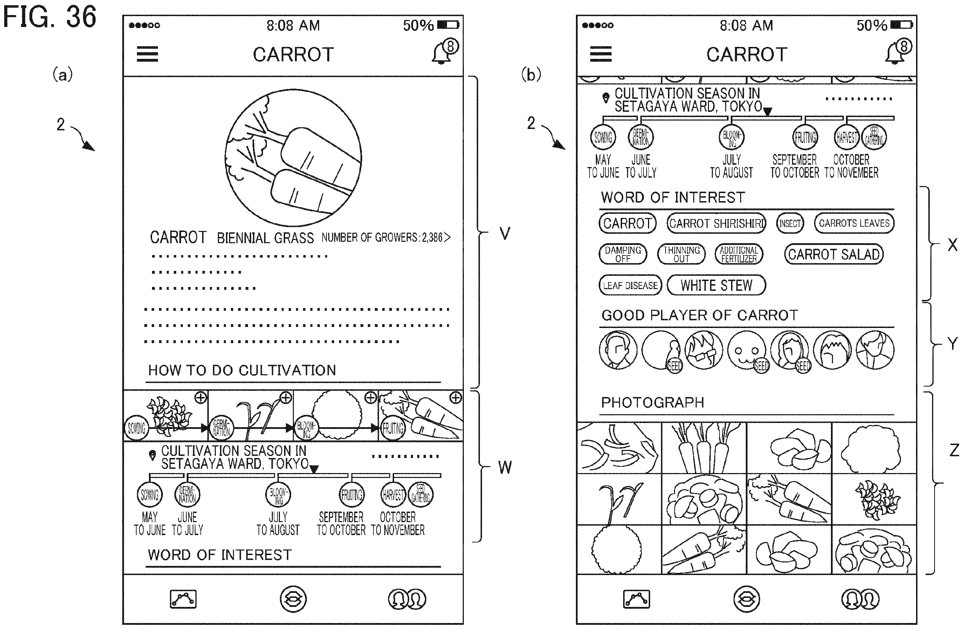

Fig. 36 is a diagram illustrating an example of a screen on which the detailed information of the plant is displayed among the examples of the screen displayed on the user terminal 2.

As illustrated in Fig. 36, the user terminal 2 can display the detailed information of the plant which can be cultivated using the planter 1. In the example of Fig. 36, the detailed information of a "carrot" is displayed. A scientific name, a place of origin, a classification, a descriptive text for reference in planting, and the like of the target plant can be displayed in a display region V of Fig. 36(a). It is also possible to display the number of users U who cultivate the carrot so that the user U can specifically check the users U who are cultivating the carrot. In the example of Fig. 36, when a button displayed as the "number of cultivators: 2, 386," the users U cultivating the carrot can be displayed in a list form. A season of each stage and a captured image of the plant at each stage can be displayed in a display region W of Fig. 36(a) as a cultivation season of the target plant (the carrot in the example of Fig. 36) in a selected region. In the example of Fig. 36(a), an image indicating that the sowing stage is "May to June," the germination stage is "June to July," the flowering stage is "July to August," the fruiting stage is "September to October," and the harvest stage and the seed gathering stage are "October to November" is displayed as the cultivation season in Setagaya Ward, Tokyo. Further, the cultivation season in other regions as well as Setagaya Ward, Tokyo can be displayed. In the example illustrated in Fig. 36(a), when a "season in other regions" button is pressed, the cultivation seasons in regions other than Setagaya Ward, Tokyo can be displayed. Although not illustrated, a map illustrating the target region may be displayed together with the display of the cultivation season.

A tag group related to the target plant can be displayed in a display region X of Fig. 36(b) as a "keyword of interest." When one of the keywords displayed in the tag group is pressed, it a search result related to the keyword can be displayed. In the example of Fig. 36, the tag group related to the carrot is displayed. The users U who have cultivated the target plant well are displayed in the display region Y of Fig. 36(b) in a list form as a "good player." In the example of Fig. 36, as the good player for the carrot, seven users U are selected, and thumbnail images indicating the seven users U are displayed. Further, in a case in which the users U selected as the good player are currently cultivating the target plant, a stage to which the cultivation status of the user U who is cultivating it belongs can be displayed. In the example of Fig. 36, a "seed" mark (that is, a mark indicating that it is a sowing stage) is displayed superimposed on the thumbnail image of the user U selected as the good player. Posted images associated with the target plant can be displayed in a display region Z of Fig. 36(b) in a list form as a "photograph." In the example of Fig. 35, images related to the carrots are displayed in a list form.

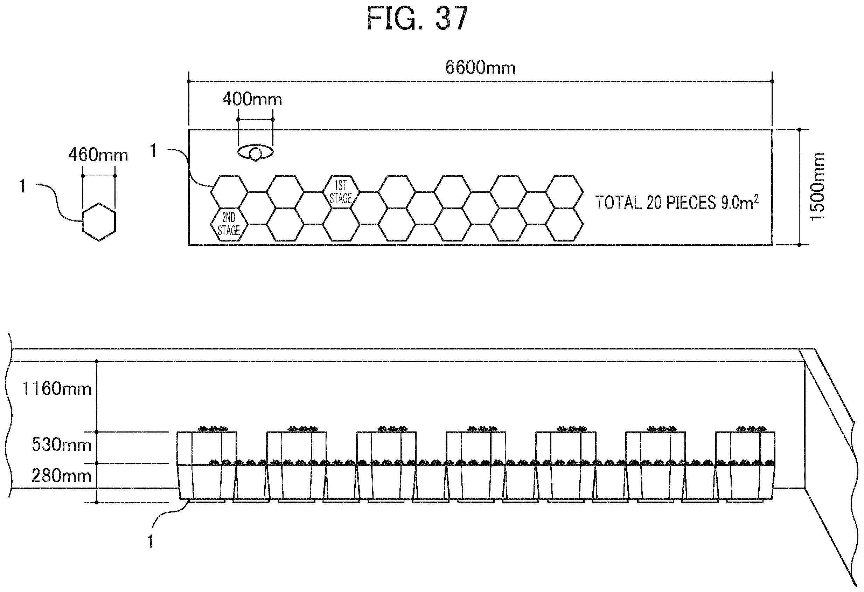

Fig. 37 is a diagram illustrating an example of a layout in a case in which a plurality of the planters 1 are arranged.

When the planter 1 having a hexagonal shape with a diameter of 460 mm is laid outed as illustrated in Fig. 36, it is possible to install 20 planters 1 efficiently in accordance with the width of the balcony (1,500 mm in length x 6,600 mm in width) and a shoulder width of a general Japanese female (400 mm) .

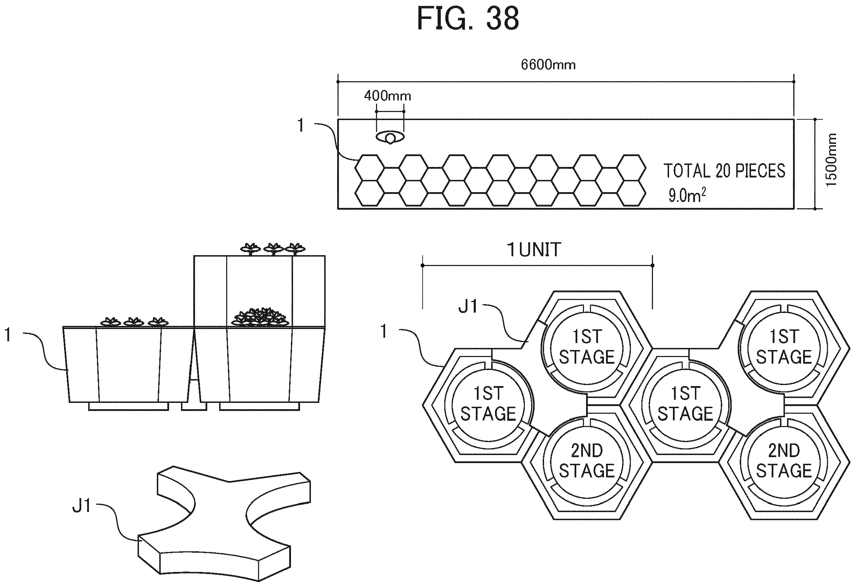

Figs. 38 to 40 are diagrams illustrating an example of a joint J in a case in which a plurality of the planters 1 are arranged.

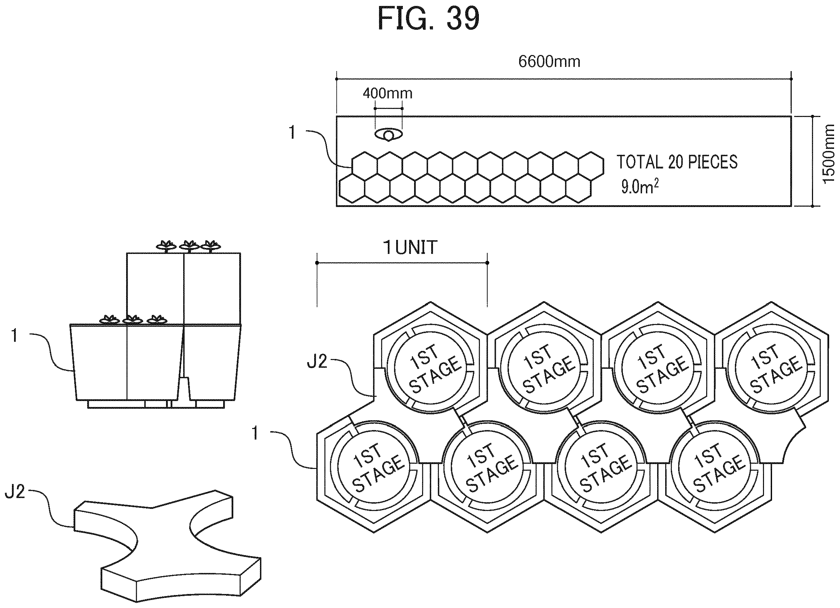

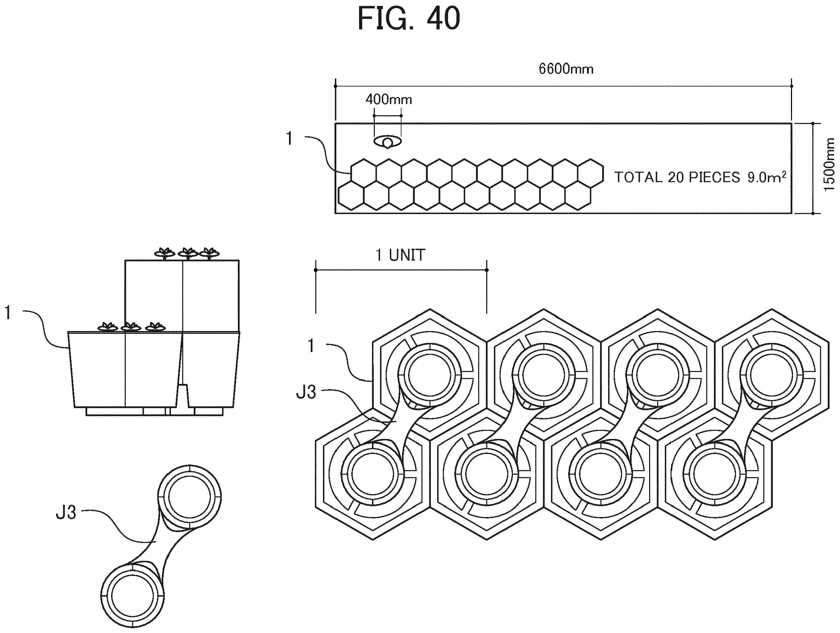

Here, the "joint" is a member for connecting two or more of planters 1 to each other and is attached to the bottom of the planter 1 in principle. When the two or more of planters 1 are connected using the joint J, the two or more of connected planters 1 support each other, and thus it is possible to prevent a situation in which the planters 1 falls down by the wind. A joint J1 illustrated in Fig. 38 can connect three planters 1. A joint J2 illustrated in Fig. 39 can connect two planters 1. A joint J3 illustrated in Fig. 40 is formed in a peanut form and can connect two planters 1.

Fig. 41 is a diagram illustrating an example of a screen of the relay cultivation manager among the examples of the screen displayed on the user terminal 2.

Here, the "relay cultivation manager" refers to a function for displaying a cultivation season of a plant selected by designating one or more of plant names (species), the harvest period, and the recipe as a search condition and a recipe of a dish using the plant. Specifically, if the search condition is designated by the user U, the growth model selection unit 814 selects the growth model for one or more species of plants matching the search condition. Further, the cultivation schedule generation unit 815 generates a cultivation schedule optimal for the user U on the basis of the selected growth model. Further, the relevant information generation unit 816 generates a list of recipes of dishes using the selected plant. Accordingly, the user U can easily understand the cultivation season of the plants that match the desire of the user U and the recipe of the dish. In the example of Fig. 41, a field for inputting the search condition is input is displayed in a display region 901. Specifically, a field for inputting a plant name, a field for inputting the harvest period, and a field for inputting a recipe of a dish are displayed as the search condition. A graph indicating the cultivation season of the plant selected as the search result is displayed in a display region 902. The user U can easily understand the cultivation season of each plant matching the desire of the user U by looking at the graph. The recipe of the dish using the plant selected as the search result is displayed in a display region 903 in a list form. The user U can easily understand the recipe of the dish using the plant matching the desire of the user U by looking at the graph. In the example of Fig. 41, the names of the dishes and the images indicating the dishes are displayed in a row. The user U can switch the menu of the dishes displayed by swiping the images of the dishes displayed in the display region 903.

Fig. 42 is an image diagram illustrating an overview of a plant abnormality detection function and an abnormality learning function of the cultivation management server 3.

The community management unit 513 of the cultivation management server 3 manages various kinds of communities in which a plurality of users U participate. The users U can make a user community with other users U on the cultivation assistance system and participate in it. The participation record of the user U in the community is stored in the user DB 713. Specifically, for example, the user U can make a "sunflower love community" in which the users U loving the sunflower participate, a "disease control community" in which the users U who thinks of plant diseases participates, or the like and participate in it. Other examples of the user community are illustrated in Fig. 42.

The user U can participate in the user community by manipulating the user terminal 2. If the user U participates in a certain user community, the user U can exchange messages with another user U participating in the user community. In step S101, the keyword detection unit 911 sets a catch-up keyword in advance. In step S102, the keyword detection unit 911 automatically detects a message including the catch-up keyword from the messages exchanged within the user community. Specifically, for example, words "disease" and "worry" are assumed to be set as the catch-up keywords in advance. At this time, a work "sick" may be included in the message exchanged within the user community. In this case, the keyword detection unit 911 automatically detects that the keyword "disease" is included in the message. A technique of detecting the catch-up keyword through the keyword detection unit 911 is not particularly limited. The catch-up keyword can be detected by a well-known detection technique. Further, the keyword detection unit 911 may perform natural language analysis without setting the catch-up keyword in advance. In step S103, the keyword detection unit 911 crawls the message exchanged within the user community using the catch-up keyword.

In step S104, the abnormality specifying unit 912 transmits the information obtained by the crawling to the expert terminal 5. Accordingly, checking by the expert is carried out. Specifically, for example, in a case in which a word "disease" is detected in the message exchanged within the user community, the abnormality specifying unit 912 transmits the cultivation information related to the plant cultivated by the user U who inputs the message to the expert terminal 5. Accordingly, the expert determines the presence or absence of an abnormality of the plant on the basis of the transmitted information. In step S105, the abnormality specifying unit 912 specifies the abnormality of the plant on the basis of the determination result by the expert which is transmitted from the expert terminal 5. In step S106, the abnormality specifying unit 912 causes information related to the specified abnormality to be displayed in a message within the user community. Specifically, for example, it is possible to causes a message "it is suffering from the powdery mildew" by the expert to be displayed as the cultivation assistance information. Further, the abnormality specifying unit 912 can also transmit information related to the specified abnormality to the cultivation assistance information generation unit 811. In this case, the cultivation assistance information generation unit 811 generates information related to the specified abnormality as the cultivation assistance information. In step S107, the abnormality specifying unit 912 associates the captured image of the plant with the disease name and stores resulting data in the cultivation history DB 711 as plant abnormality information. In step S108, the abnormality learning unit 613 performs deep learning on the abnormality (for example, pathogenesis of the powdery mildew) of the specified plant. Specifically, for example, the deep learning is performed on the cultivation information such as a cultivation region, a temperature, a humidity, a sunlight amount, a weather, a season, or the like. In step S109, the abnormality learning unit 613 adds a tag to the image related to the abnormality (for example, the pathogenesis of the powdery mildew) of the plant which is the deep learning target among the captured images of the plant stored in the cultivation information history DB 711. In step S110, the cultivation management server 3 enables the user U to search for information obtained by performing the deep learning as the detailed information related to the abnormality of the plant. Accordingly, the user U can easily acquire the information related to the abnormality of the plant and thus can cultivate the plant without failure.

One embodiment of the present invention has been described above, but the present invention is not limited to the above-described embodiment, but modifications, improvements, or the like within the scope in which the object of the present invention can be achieved can be included in the present invention.

For example, the hardware configurations illustrated in Fig. 5 and Fig. 6 are merely an example for achieving the object of the present invention and not particularly limited.

Further, the functional block diagram illustrated in Fig. 7 is merely an example and not particularly limited. That is, as long as the function capable of performing a series of processes described above as a whole is implemented in the information processing system, functional blocks for implementing the function are not limited to the example of Fig. 7.

Further, the installation places of the functional blocks are not limited to Fig. 7 and may be arbitrary. Further, one functional block may be constituted by a single piece of hardware, a single piece of software, or a combination thereof.

In a case in which the process of each functional block is executed by software, a program constituting the software is installed in a computer or the like from a network or a recording medium.

The computer may be a computer incorporated into dedicated hardware. Further, the computer may be a computer in which various kinds of programs are installed, and various kinds of functions can be executed and may be, for example, a general-purpose smartphone or a personal computer of a server.

The recording medium including the program therein is not only constituted by a removable medium distributed separately from a main body of a terminal in order to provide the program to each user U but also constituted by a recording medium or the like provided to each user U in a state in which the program is incorporated into the main body of the terminal in advance.

In this specification, steps describing a program to be recorded in a recording medium include processes which are performed in parallel or individually even though they are not necessarily chronologically performed in addition to the processes which are chronologically performed in accordance with the order.

Further, in this specification, the term "system" means an entire apparatus constituted by a plurality of apparatuses, a plurality of units, or the like.

In brief, the information processing device to which the present invention is applied can have various kinds of embodiments by employing the following configurations. That is, the information processing device to which the present invention is applied
is an information processing device that assists in cultivating a plant, and includes:
a cultivation information acquisition unit that acquires cultivation information indicating a status of each plant cultivated by each of a plurality of users (for example, the cultivation information acquisition unit 510 of Fig. 7);
a growth model generation/update unit that generates or updates a growth model optimal for each environment in which the plant is placed on the basis of the cultivation information acquired by the cultivation information acquisition unit (for example, the growth model generation/update unit 612 of Fig. 7); and
a cultivation assistance unit that generates cultivation assistance information used when an assistance target user cultivates the plant on the basis of the cultivation information indicating the status of the plant cultivated by the assistance target user acquired by the cultivation information acquisition unit and the growth model (for example, the cultivation assistance unit 512 of Fig. 7). Accordingly, even a beginner can cultivate the plant skillfully.

Further, the information processing device may further include: a growth model selection unit that selects, in a case in which each of the plurality of users is desired to cultivate one or more species of plants, the growth model of each of the one or more species of plants serving as a target from a plurality of growth models stored in advance on the basis of at least one of a plant name, a harvest period, and a recipe of a dish (for example, the growth model selection unit 814 of Fig. 7); and a cultivation schedule generation unit that generates a cultivation schedule optimal for each of the plurality of users on the basis of the growth model selected by the growth model selection unit (for example, the cultivation schedule generation unit 815 of Fig. 7). Accordingly, the user U can easily understand the cultivation season of the plant matching the desire of the user U and a recipe of a dish.

Further, the information processing device may further include a relevant information generation unit that generates plant relevant information serving as information related to the plant cultivated by each of the plurality of users for each of the plurality of users (for example, the relevant information generation unit 816 of Fig. 7). Accordingly, it is possible to cause the user U to maintain motivation to cultivate the plant or cause the user U to think of growing the plant which are the target of the plant relevant information.

Further, the information processing device may further include: a keyword detection unit that detects a keyword related to an abnormality of the plant cultivated by the user from content of a message transmitted by each of user terminals operated by each of the plurality of users (for example, the keyword detection unit 911 of Fig. 7); an abnormality specifying unit that specifies a plant having an abnormality among the plants cultivated by the user who transmits a message including the detected keyword and specifies a type of the abnormality from the cultivation information of the plant (for example, the abnormality specifying unit 912 of Fig. 7); and an abnormality learning unit that performs learning intended for acquiring information effective for preventing or eliminating the specified abnormality on the basis of the cultivation information (for example, the abnormality learning unit 613 of Fig. 7). Accordingly, the user U can easily acquire the information related to the abnormality of the plant and thus cultivate the plant without failure.

Here, the information processing device to which the present invention is applied may be configured to set a default of a cultivation method as an initial growth model, for example, when a QR code (registered trademark) is printed on a packaging paper of the seed S, and the QR code (registered trademark) is scanned by user terminal 2.

Further, the plant grown by the user U may be recorded on an application to be shared with another user U. Furthermore, it is also possible to share the plant grown by the user U with other users.

Further, a character may spin a story on an application in conjunction with the growth of the plant being grown by the user U. Furthermore, the plant may be personified, evolved as a game character, and upgraded.

### EXPLANATION OF REFERENCE NUMERALS

1, 1-1, 1-2, 1-k, 1-n PLANTER
2, 2-1, 2-2, 2-k, 2-n USER TERMINAL
3 CULTIVATION MANAGEMENT SERVER
4 WEATHER DATA MANAGEMENT SERVER
5 SPECIALIST TERMINAL
10 BASE
11 SOLAR PANEL
12 EXPANSION UNIT
101 MAIN SYSTEM UNIT PORTION
102 SENSOR UNIT
103 IMAGING UNIT
104 WIRELESS COMMUNICATION UNIT
105 DISPLAY UNIT
106 MOISTURE SUPPLY UNIT
21, 51 CPU
22, 52 ROM
23, 53 RAM
24, 54 BUS
25, 55 INPUT/OUTPUT INTERFACE
26 TOUCH MANIPULATION INPUT UNIT
27 DISPLAY UNIT
28, 57 INPUT UNIT
29, 58 STORAGE UNIT
30, 59 COMMUNICATION UNIT
31, 60 DRIVE
41, 71 REMOVABLE MEDIUM
56 OUTPUT UNIT
105 DISPLAY UNIT
301 WATER PACK
302 WATER INJECTION UNIT
303 MOISTURE CONTROL UNIT
510 CULTIVATION INFORMATION ACQUISITION UNIT
511 LEARNING UNIT
512 CULTIVATION ASSISTANCE UNIT
513 COMMUNITY MANAGEMENT UNIT
611 GROWTH MODEL COMPARING UNIT
612 GROWTH MODEL GENERATION/UPDATE UNIT
613 ABNORMALITY LEARNING UNIT
711 CULTIVATION INFORMATION HISTORY DB
712 GROWTH MODEL DB
713 USER DB
714 RELEVANT INFORMATION DB
810 CULTIVATION INFORMATION COMPARING UNIT
811 CULTIVATION ASSISTANCE INFORMATION GENERATION UNIT
812 INFORMATION TRANSMISSION CONTROL UNIT
814 GROWTH MODEL SELECTION UNIT
815 CULTIVATION SCHEDULE GENERATION UNIT
816 RELEVANT INFORMATION GENERATION UNIT
901, 902, 903 DISPLAY REGION
911 KEYWORD DETECTION UNIT
912 ABNORMALITY SPECIFYING UNIT
C, C1, C2, C3 CAMERA
J, J1, J2, J3 JOINT
N NETWORK
S, S1, S2, Sk, Sp SEED
SO, SOk SOIL VALUE
T INDICATOR
U, U1, U2, Uk, Un USER
E, F, G, H, I, L, M, P, Q, S1 to S7, V, W, X, Y, Z DISPLAY REGION

## Claims

1. An information processing device that assists in cultivating a plant, comprising:
a cultivation information acquisition unit that acquires cultivation information indicating a status of each plant cultivated by each of a plurality of users;
a growth model generation/update unit that generates or updates a growth model optimal for each environment in which the plant is placed on the basis of the cultivation information acquired by the cultivation information acquisition unit; and
a cultivation assistance unit that generates cultivation assistance information used when an assistance target user cultivates the plant on the basis of the cultivation information indicating the status of the plant cultivated by the assistance target user acquired by the cultivation information acquisition unit and the growth model.

2. The information processing device according to claim 1, further comprising:
a growth model selection unit that selects, in a case in which each of the plurality of users is desired to cultivate one or more species of plants, the growth model of each of the one or more species of plants serving as a target from a plurality of growth models stored in advance on the basis of at least one of a plant name, a harvest period, and a recipe of a dish; and
a cultivation schedule generation unit that generates a cultivation schedule optimal for each of the plurality of users on the basis of the growth model selected by the growth model selection unit.

3. The information processing device according to claim 1 or 2, further comprising,
a relevant information generation unit that generates plant relevant information serving as information related to the plant cultivated by each of the plurality of users for each of the plurality of users.

4. The information processing device according to any one of claims 1 to 3, further comprising:
a keyword detection unit that detects a keyword related to an abnormality of the plant cultivated by the user from content of a message transmitted by each of user terminals operated by each of the plurality of users;
an abnormality specifying unit that specifies a plant having an abnormality among the plants cultivated by the user who transmits a message including the detected keyword and specifies a type of the abnormality from the cultivation information of the plant; and
an abnormality learning unit that performs learning intended for acquiring information effective for preventing or eliminating the specified abnormality on the basis of the cultivation information.

5. An information processing method executed by an information processing device, comprising:
a cultivation information acquisition step of acquiring cultivation information indicating a status of each plant cultivated by each of a plurality of users;
a growth model generation/update step of generating or updating a growth model optimal for each environment in which the plant is placed on the basis of the cultivation information acquired in the cultivation information acquisition step; and
a cultivation assistance step of generating cultivation assistance information used when an assistance target user cultivates the plant on the basis of the cultivation information indicating the status of the plant cultivated by the assistance target user acquired in the cultivation information acquisition step and the growth model.

6. A program causing a computer that controls an information processing device to execute a control process comprising:
a cultivation information acquisition step of acquiring cultivation information indicating a status of each plant cultivated by each of a plurality of users;
a growth model generation/update step of generating or updating a growth model optimal for each environment in which the plant is placed on the basis of the cultivation information acquired in the cultivation information acquisition step; and
a cultivation assistance step of generating cultivation assistance information used when an assistance target user cultivates the plant on the basis of the cultivation information indicating the status of the plant cultivated by the assistance target user acquired in the cultivation information acquisition step and the growth model.
